(19)

**Europäisches Patentamt**
**European Patent Office**
**Office européen des brevets**

(11) **EP 2 374 041 B1**

(12) **EUROPÄISCHE PATENTSCHRIFT**

(45) Veröffentlichungstag und Bekanntmachung des Hinweises auf die Patenterteilung:
**22.01.2014 Patentblatt 2014/04**

(21) Anmeldenummer: **09774612.7**

(22) Anmeldetag: **02.12.2009**

(51) Int Cl.:
*G02F 1/33* (2006.01)    *H01S 3/13* (2006.01)

(86) Internationale Anmeldenummer:
**PCT/AT2009/000469**

(87) Internationale Veröffentlichungsnummer:
**WO 2010/063051 (10.06.2010 Gazette 2010/23)**

(54) **VERFAHREN UND VORRICHTUNG ZUM ERZEUGEN EINES SELBSTREFERENZIERTEN OPTISCHEN FREQUENZKAMMS**

METHOD AND DEVICE FOR GENERATING A SELF-REFERENCED OPTICAL FREQUENCY COMB

PROCÉDÉ ET DISPOSITIF POUR PRODUIRE UN PEIGNE DE FRÉQUENCES OPTIQUE AUTORÉFÉRENCÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.12.2008 DE 102008059902**

(43) Veröffentlichungstag der Anmeldung:
**12.10.2011 Patentblatt 2011/41**

(73) Patentinhaber: **Femtolasers Produktions GmbH 2100 Korneuburg (AT)**

(72) Erfinder:
• **GREBING, Christian**
  **38102 Braunschweig (DE)**
• **KOKE, Sebastian**
  **10715 Berlin (DE)**
• **STEINMEYER, Günter**
  **10829 Berlin (DE)**

(74) Vertreter: **Sonn & Partner Patentanwälte Riemergasse 14 1010 Wien (AT)**

(56) Entgegenhaltungen:
**US-A1- 2004 017 833    US-A1- 2004 179 561**

• TELLE H R ET AL: "Carrier-envelope offset phase control: a novel concept for absolute optical frequency measurement and ultrashort pulse generation" APPLIED PHYSICS B: LASERS AND OPTICS, SPRINGER INTERNATIONAL, BERLIN, DE LNKD- DOI:10.1007/S003400050813, Bd. B69, Nr. 4, 1. Oktober 1999 (1999-10-01), Seiten 327-332, XP002198106 ISSN: 0946-2171 in der Anmeldung erwähnt
• GREBING C ET AL: "Self-referencing of optical frequency combs" 2. Juni 2009 (2009-06-02), LASERS AND ELECTRO-OPTICS, 2009 AND 2009 CONFERENCE ON QUANTUM ELECTRONICS AND LASER SCIENCE CONFERENCE. CLEO/ QELS 2009. CONFERENCE ON, IEEE, PISCATAWAY, NJ, USA, PAGE(S) 1 - 2 , XP031520531 ISBN: 9781557528698 das ganze Dokument
• JONES R J ET AL: "Stabilization of femtosecond lasers for optical frequency metrology and direct optical to radio frequency synthesis", PHYSICAL REVIEW LETTERS APS USA, vol. 86, no. 15, 9 April 2001 (2001-04-09) , pages 3288-3291, ISSN: 0031-9007
• JONES R J ET AL: "Optical frequency measurements with a reference cavity stabilized femtosecond laser for improved short term stability", TECHNICAL DIGEST. SUMMARIES OF PAPERS PRESENTED AT THE CONFERENCE ON LASERS AND ELECTRO-OPTICS. CONFERENCE EDITION (IEEE CAT. NO.02CH37337) OPT. SOC. AMERICA WASHINGTON, DC, USA, vol. 1, 2002, pages 603-604 vol.1, ISBN: 1-55752-705-9

EP 2 374 041 B1

- **JASON JONES R ET AL: "Stabilization of the frequency, phase, and repetition rate of an ultra-short pulse train to a Fabry-Perot reference cavity", OPTICS COMMUNICATIONS, NORTH-HOLLAND PUBLISHING CO. AMSTERDAM, NL, vol. 175, no. 4-6, 1 March 2000 (2000-03-01), pages 409-418, XP004202921, ISSN: 0030-4018, DOI: 10.1016/S0030-4018(00)00483-1**

**Beschreibung**

Die Erfindung betrifft ein Verfahren zum Erzeugen eines hinsichtlich zeitlicher Schwankungen der Carrier-Envelope-Offset-Frequenz ($F_{CEO}$) kompensierten Zuges zeitlich äquidistanter kurzer Laserpulse, dessen Spektrum einen Frequenzkamm äquidistant beabstandeter Einzellinien aufweist, deren Carrier-Envelope-Offset-Frequenz auf einen zeitlich gleichbleibenden vorgegebenen Wert eingestellt ist.

Weiters bezieht sich die Erfindung auf eine Vorrichtung zum Erzeugen eines hinsichtlich zeitlicher Schwankungen der Carrier-Envelope-Offset-Frequenz kompensierten Zuges zeitlich äquidistanter kurzer Laserpulse, dessen Spektrum einen Frequenzkamm äquidistant beabstandeter Einzellinien aufweist, deren Carrier-Envelope-Offset-Frequenz auf einen zeitlich gleichbleibenden vorgegebenen Wert eingestellt ist.

Unter Einstellen ("Stabilisieren") wird hier das Einstellen einer Größe auf einen gleichbleibenden Wert verstanden. Das Stabilisieren auf einen vorgegebenen Wert stellt somit das Einstellen einer Größe in der Weise dar, dass diese Größe den vorgegebenen Wert zeitlich gleichbleibend aufweist.

Ein Zug kurzer Laserpulse lässt sich mit einem so genannten modengekoppelten Laser erzeugen. In einem Lasermedium können bei genügender Bandbreite eines Laserübergangs im Resonator des Lasers sehr viele Eigenschwingungen mit verschiedenen Frequenzen angeregt werden. Die Eigenschwingungen werden auch als Moden bezeichnet. Durch geeignete Mechanismen kann zwischen den Eigenschwingungen eine feste Phasenbeziehung hergestellt werden. Dies nennt man Modensynchronisation oder Modenkopplung. Aufgrund der Modenkopplung kommt es zu einer Abstrahlung kurzer Lichtpulse mit einem zeitlichen Abstand $\tau_R$, der einer Umlaufzeit eines Laserpulses im Resonator des Lasers entspricht. Aus der zeitlichen Äquidistanz der Pulse folgt unmittelbar, dass das Frequenzspektrum eines solchen Lasers aus äquidistanten Einzellinien besteht, einem so genannten Frequenzkamm. Aufgrund dieses Zusammenhangs können ein Verfahren bzw. eine Vorrichtung, die einen solchen Zug kurzer Laserpulse erzeugt oder einen modifizierten Zug kurzer Laserpulse erzeugt, auch als Verfahren bzw. Vorrichtung zum Erzeugen eines Frequenzkamms bezeichnet werden. Der Abstand im Frequenzraum zwischen den einzelnen Linien $\Delta f$ entspricht einem inversen Wert der Umlaufzeit im Resonator $\tau_R$. Somit gilt: $\Delta f = 1/\tau_R$.

Aus dem Artikel "Route to phase control of ultrashort light pulses" von L. Xu et al., Opt. Lett. 21, 2008 ff. (1996) ist es bekannt, dass die Frequenzen $f_i$ der Einzellinien i keine ganzzahligen Vielfachen der Differenzfrequenz $\Delta f$ sind. Vielmehr gilt für die Frequenzen $f_i$ der Einzellinien i folgender Zusammenhang: $f_i = f_{CEO} + i\Delta f$. Hierbei gibt $f_{CEO}$ eine in der Literatur als Carrier-Envelope-Offset (CEO)-Frequenz bezeichnete Versatz- oder Offset-Frequenz an. Diese Offset-Frequenz ist dadurch bedingt, dass die Gruppengeschwindigkeit der Laserpulse von der Phasengeschwindigkeit der einzelnen sich überlagernden Lasermoden bzw. Einzellinien abweicht. Typischerweise propagiert das elektrische Feld der einzelnen Lasermoden mit einer leicht höheren Phasengeschwindigkeit durch dielektrischen Medien im Resonator des Lasers als die Einhüllende des Laserpulses. Hierdurch entsteht ein Phasenversatz $\Delta\varphi_{CEO} = 2\pi\, f_{CEO}\, \tau_R$ zwischen der Einhüllenden und den einzelnen Moden bei jedem Umlauf im Resonator. Im Zeitbild bedeutet dieser Versatz, dass ein Zeitversatz zwischen dem Auftreten einer maximalen Amplitude des elektrischen Felds und dem Auftreten der maximalen Amplitude der Einhüllenden auftritt. Dieser zeitliche Versatz wird häufig auch als Carrier-Envelope-Offset-Phase $\Delta\varphi_{CEO}$ bezeichnet, obwohl der zeitliche Versatz korrekterweise gegeben ist durch $\Delta T_{CEO} = \Delta\varphi_{CEO}/2\pi\nu_0$, wobei $\nu_0$ die Trägerfrequenz des Laserpulses ist.

Da die Größe der Carrier-Envelope-Offset-Frequenz $f_{CEO}$ empfindlich von Umweltfaktoren, z.B. Temperatur oder Luftdruck, aber auch der Pumpleistung des Lasermediums usw. abhängt, um nur einige, jedoch nicht alle Faktoren aufzuzählen, ist die Carrier-Envelope-Offset-Frequenz darüber hinaus zeitlich nicht stabil.

Im Stand der Technik sind unterschiedliche Verfahren vorgeschlagen worden, um die Carrier-Envelope-Offset-Frequenz $f_{CEO}$ zu ermitteln. In der Veröffentlichung "Carrier-envelope offset phase control: A novel concept for absolute optical frequency measurement and ultrashort pulse generation" von H.R. Telle et al., Appl. Phys. B 69, 327 ff. (1999) sind einige mögliche Verfahren beschrieben. Am häufigsten eingesetzt werden so genannte f-zu-2f-Interferenzverfahren, bei denen ein Teil des Lasersignals in ein Interferometer geleitet wird. In dem Interferometer wird ein nicht-linearer optischer Prozess ausgenutzt, um die zweite Harmonische einer niederenergetischen Lasermode bzw. einer niederenergetischen Einzellinie des Frequenzkamms zu erzeugen und zur Interferenz mit einer hochenergetischen (hochfrequenten) Einzellinie des Frequenzkamms des Laserpulses zu bringen. Wenn $f_i$ die Frequenz aus dem niederenergetischen Bereich des Frequenzkamms $f_i = i \cdot \Delta f + f_{CEO}$ ist, so gilt nach der Frequenzverdoppelung $2f_i = (2i\Delta f + 2f_{CEO})$. Wird somit diese frequenzverdoppelte Einzellinie mit einer Einzellinie, die die doppelte Frequenz aufweist, also $f_{2i} = 2i\Delta f + f_{CEO}$. zur Interferenz gebracht, so ergibt sich für das Schwebungssignal $2f_i - f_{2i} = (2i\Delta f + 2f_{CEO}) - (2i\Delta f + F_{CEO}) = f_{CEO}$. Die Frequenz des Schwebungssignals gibt somit direkt die Carrier-Envelope-Offset-Frequenz an.

Für einige Anwendungen ist es ausreichend, die Carrier-Envelope-Offset-Frequenz zu kennen. Für andere Anwendungen ist es hingegen wünschenswert bzw. notwendig, den Phasenversatz zwischen dem unterliegenden elektrischen Feld und der Einhüllenden des Laserpulses konstant zu halten, vorzugsweise auf Null zu minimieren.

Dies ist beispielsweise bei einer Erzeugung kurzer Pulse mit Pulslängen im Attosekundenbereich von Vorteil bzw. notwendig.

Aus der DE 199 11 103 A1 sind ein Verfahren und eine Vorrichtung zum Erzeugen kurzer Laserpulse sowie deren Anwendung zur Synthese optischer Frequenzen bekannt. In einer stabilisierten Lasereinrichtung, mit der in einer Resonatoranordnung umlaufende Lichtpulse, die jeweils aus spektralen Komponenten entsprechend einer Vielzahl longitudinaler Moden der Resonatoranordnung zusammengesetzt sind, erzeugt werden, wird durch eine vorbestimmte Einstellung der linearen Dispersion der Resonatoranordnung jede Mode einer spektralspezifischen Frequenzänderung unterzogen. Es wird eine Regelung zur simultanen Einstellung der Dispersion und der Resonatorlänge beschrieben, mit der die Gruppen- und Phasenumlaufzeiten der im Resonator umlaufenden Lichtpulse geregelt werden. Die Einstellung der Dispersion kann beispielsweise über ein Einschieben von Keilprismen in den Strahlengang erreicht werden. Alternativ und/oder zusätzlich kann der Resonator einen schwenkbaren Endspiegel aufweisen. Die vorgeschlagenen Maßnahmen zur Änderung der Dispersion führen zwangsläufig zu einer Änderung der optischen Weglänge bzw. einer Änderung der Resonatorumlaufzeit $\tau_R$., d.h. der zeitliche Abstand der Lichtpulse ändert sich. Um diesen Abstand bzw. den Frequenzabstand der Einzellinien $\Delta f$ konstant zu halten, ist eine weitere Regelung notwendig, die beispielsweise die Resonatorlänge regelt. Die in der DE 199 11 103 A1 beschriebenen Verfahren und Vorrichtungen erfordern jeweils mindestens zwei einander beeinflussende Regelkreise, um die Carrier-Envelope-Offset-Frequenz $f_{CEO}$ und die Resonatorumlaufzeit $\tau_R$ bzw. die Wiederholfrequenz $f_{rep}$, welche dem Frequenzabstand $\Delta f$ entspricht, konstant zu halten. Der apparative Aufwand ist entsprechend groß. Da mechanische Bewegungen optischer Komponenten im Resonator des Lasers erforderlich sind, sind die erreichbaren Regelbandbreiten im Allgemeinen auf wenige kHz beschränkt. Eine weitaus schnellere Regelung lässt sich gemäß der DE 199 11 103 A1 über eine Variation der Pumpleistung des Laseroszillators über akustooptische oder elektrooptische Modulatoren erreichen. Dadurch wird jedoch die Spitzenleistung der im Resonator umlaufenden Pulse beeinflusst, was über nicht-lineare optische Prozesse wiederum den Phasenversatz $\Delta\varphi_{CEO}$ manipuliert. Während akustooptische Modulatoren auf Regelbandbreiten bis etwa 100 kHz begrenzt sind, können elektrooptische Systeme Regelbandbreiten im MHz-Bereich erreichen. Die Systeme sind jedoch aufgrund der Regelelektronik begrenzt. Da ein freies Anschwingen von Oszillationen vermieden werden muss, ist die Regelverstärkung typischerweise limitiert. Dieses führt wiederum dazu, dass sehr schnelle Störkomponenten des $\Delta\varphi_{CEO}$-Signals (so genannte "Glitches") nur unzureichend ausgeregelt werden können.

In der US 2007/0086713 A1 ist ein Frequenzstandard beschrieben, der auf einem modengekoppelten Faserlaser basiert. Es wird die Carrier-Envelope-Offset-Frequenz ermittelt und über eine Phase-Lock-Loop-Schaltung zur Steuerung von Laserparametern wie beispielsweise der Pumpleistung oder der Temperatur eines Bragg-Gitters, verwendet, um die Carrier-Envelope-Offset-Frequenz selbst zu stabilisieren, d.h. auf einen festen Wert einzustellen.

Aus der US 2004/0017833 A1 ist ein System mit einem modengekoppelten Pulslaser bekannt, bei dem zur Phasenstabilisierung aus dem optischen Ausgangssignal zwei Frequenzen Frequenzverdopplung hergeleitet werden, wobei überdies eine Frequenz geringfügig verschoben wird, um bei Zusammenführen mit der anderen Frequenz ein Schwebungssignal zu erhalten, welches zur Phasenstabilisierung herangezogen wird.

In der US 2004/0179561 A1 ist andererseits eine Technik zur Stabilisierung der Ausgangsfrequenz eines Dauerstrichlasers beschrieben, wobei das optische Laser-Ausgangssignal über einen Strahlteiler einem mit einem akustooptischen Modulator (AOM) realisierten Frequenzschieber zugeführt wird. Das Signal wird dann, nach Reflexion an einem Spiegel und nochmaligen durchlauf des AOM wieder dem Strahlteiler zugeführt. Von diesem wird das Signal zu einem weiteren Strahlteiler reflektiert, wo ein Teil der Strahlung einer Regelschleife mit Mach-Zender-Interferometer, mit einer optischen Verzögerungsleitung, zugeführt wird, um schließlich über einen Frequenz/SpannungsWandler, einen Integrator und einen Spannungs/Frequenz-Wandler ein Korrektursignal für den AOM herzuleiten.

Aus dem Artikel Jones R. J. et al.: "Stabilization of femtosecond lasers for optical frequency metrology and direct optical to radio frequency synthesis", Physical Review Letters, Bd. 86, Nr. 15, 9. April 2001, Seiten 3288-3291 und Jones R. J. et al.: "Optical frequency measurements with a reference cavity stabilized femtosecond laser for improved short term stability", Technical Digest. Summaries of papers presented at the Conference on Lasers and Electro-optics, Bd. 1, 2002, Seiten 603-604, der als nächstkommender Stand der Technik anzusehen ist, ist schließlich eine Regelung für einen Femtosekundenlaser bekannt, wobei ein Frequenzkamm mittels eines Fabry-Perot-Referenzresonators gemessen wird; die erhaltene Messgröße dient als Rückkopplungssignal für die Stabilisierung des Lasers, wobei als Stellglieder im Laser Piezowandler vorgesehen sind. Im einzelnen werden die Ausgangspulse eines Lasers zur Regelung der durchschnittlichen Frequenz des Frequenzkamms einem akustooptischen Modulator (Frequenzschieber) zugeführt, wobei die in der ersten Beugungsordnung austretenden Impulse zu diesem Frequenzschieber zurück reflektiert werden, so dass sie nochmals einer Beugung unterworfen werden, wonach sie einem Regelkreis mit einem Referenzresonator zugeführt werden; dabei werden zwei Regelsignale hergeleitet, die einerseits gemeinsam einem Regeleingang des akustooptischen Modulators sowie andererseits - getrennt - den Piezowandlern im Laser zugeführt werden. Der gezeigte Aufbau stellt eine Weiterentwicklung eines von den selben Autoren (zusammen mit weiteren Autoren) bereits früher gezeigten Verfahrens dar (s. Jones R. J. et al.: "Stabilization of the frequency, phase, and repetition rate of an ultra-short pulse train to a Fabry-Perot reference cavity", Optics Communications, Bd. 175, Nr. 4-6, 1. März 2000, Seiten 409-418).

Unabhängig von der genauen Ausführung sind im Stand der Technik keine Lasersysteme bekannt, bei denen durch eine Stabilisierung des Werts der Carrier-Envelope-Offset-Frequenz $f_{CEO}$ nicht auch andere Laserparameter, wie beispielsweise die Laserleistung, die Pulsdauer oder die Pulswiederholrate, welche identisch mit der Umlauffrequenz ist, beeinflusst werden.

Der Erfindung liegt somit die Aufgabe zugrunde, ein Verfahren und eine Vorrichtung anzugeben, die einen Frequenzkamm erzeugen, bei dem die Carrier-Envelope-Offset-Frequenz stabilisiert bzw. kompensiert wird.

Die Aufgabe wird erfingdungsgemäß durch ein Verfahren bzw. eine Vorrichtung mit den Merkmalen der unabhängigen Ansprüche gelöst. Vorteilhafte Ausführungsformen und Weiterbildungen ergeben sich aus den Unteransprüchen.

Der Erfindung liegt der Gedanke zugrunde, die Carrier-Envelope-Offset-Frequenz experimentell zu ermitteln und die Einzellinien des Frequenzkamms des Zugs zeitlich äquidistanter kurzer Laserpulse um eine Frequenz zu verschieben, die von der ermittelten Carrier-Envelope-Offset-Frequenz abgeleitet ist. Hierfür wird ein akustooptischer Frequenzschieber verwendet.

Insbesondere sieht die Erfindung somit ein Verfahren vor zum Erzeugen eines hinsichtlich zeitlicher Schwankungen der Carrier-Envelope-Offset-Frequenz kompensierten Zuges zeitlich äquidistanter kurzer Laserpulse, dessen Spektrum einen Frequenzkamm äquidistant beabstandeter Einzellinien aufweist, deren Carrier-Envelope-Offset-Frequenz auf einen zeitlich gleichbleibenden vorgegebenen Wert eingestellt ist, mit folgenden Schritten:

- Empfangen eines unkompensierten Zuges zeitlich äquidistanter kurzer Laserpulse;
- Leiten des unkompensierten Zuges auf einen akustooptischen Frequenzschieber;
- Ermitteln eines Carrier-Envelope-Offset-Signals, das eine Frequenz aufweist, die der Carrier-Envelope-Offset-Frequenz von Einzellinien im Frequenzkamm des unkompensierten Zuges gleich ist;
- wobei entweder ein Anteil des unkompensierten Zuges vor seinem Auftreffen auf den akustooptischen Frequenzschieber ausgekoppelt und zur Ermittlung des Carrier-Envelope-Offset-Signals verwendet wird, oder

  die am Ausgang des akustooptischen Frequenzschiebers austretende nullte Beugungsordnung des unkompensiereten Zuges zur Ermittlung des Carrier-Envelope-Offset-Signals verwendet wird;

- Ableiten eines Steuersignals mit einer Frequenz aus diesem Carrier-Envelope-Offset-Signal;
- Ansteuern des akustooptischen Frequenzschiebers mit diesem Steuersignal, so dass an dessen Ausgang in der ersten Beugungsordnung der hinsichtlich zeitlicher Schwankungen der Carrier-Envelope-Offset-Frequenz kompensierte Zug zeitlich äquidistanter kurzer Laserpulse erzeugt wird, wobei die Einzellinien des dem kompensierten Zug zugehörigen Frequenzkamms um die Frequenz des Steuersignals verschoben sind, bezogen auf die Einzellinien des unkompensierten Zuges.

Die entsprechende Vorrichtung zum Erzeugen eines hinsichtlich zeitlicher Schwankungen der Carrier-Envelope-Offset-Frequenz kompensierten Zuges zeitlich äquidistanter kurzer Laserpulse, dessen Spektrum einen Frequenzkamm äquidistant beabstandeter Einzellinien aufweist, deren Carrier-Envelope-Offset-Frequenz auf einen zeitlich gleichbleibenden vorgegebenen Wert eingestellt ist, umfasst

- einen zum Empfangen eines unkompensierten Zuges zeitlich äquidistanter kurzer Laserpulse ausgebildeten Eingang;
- einen im Strahlengang des empfangenen unkompensierten Zuges angeordneten akustooptischen Frequenzschieber;
- eine Carrier-Envelope-Offset-Frequenz-Ermittlungseinheit, die dazu angeordnet und eingerichtet ist, um aus dem unkompensierten Zug ein elektronisches Carrier-Envelope-Offset-Signal zu erzeugen, das eine Frequenz aufweist, die der Carrier-Envelope-Offset-Frequenz von Einzellinien im Frequenzkamm des unkompensierten Zuges gleich ist;
- weiters entweder Mittel, die ausgebildet sind, um einen Anteil des unkompensierten Zuges vor seinem Auftreffen auf den akustooptischen Frequenzschieber aus dem Strahlengang auszukoppeln und der Carrier-Envelope-Offset-Frequenz-Ermittlungseinheit zuzuleiten;
- oder Mittel, die ausgebildet sind, um die am Ausgang des akustooptischen Frequenzschiebers austretende nullte Beugungsordnung des unkompensierten Zuges der Carrier-Envelope-Offset-Frequenz-Ermittlungseinheit zuzuleiten;
- eine mit der Carrier-Envelope-Offset-Frequenz-Ermittlungseinheit gekoppelte Steuereinheit, die dazu ausgebildet ist, aus dem Carrier-Envelope-Offset-Signal ein Steuersignal mit einer Frequenz abzuleiten;
- wobei der akustooptische Frequenzschieber so ausgebildet und mit der Steuereinheit verbunden ist, dass er mittels des Steuersignals ansteuerbar und als linearer Frequenzschieber betreibbar ist, so dass im Betrieb der Vorrichtung am Ausgang des Frequenzschiebers in der ersten Beugungsordnung der hinsichtlich zeitlicher Schwankungen der Carrier-Envelope-Offset-Frequenz kompensierte Zug austritt, wobei die Einzellinien des dem kompensierten Zug zugehörigen Frequenzkamms um die Frequenz des Steuersignals verschoben sind, bezogen auf die Einzellinien des unkompensierten Zuges.

Dass der akustooptische Frequenzschieber mittels des Steuersignals angesteuert wird, bedeutet, dass das Steuersignal eine Frequenz aufweist, die als akustische Frequenz in dem akustooptischen Frequenzschieber verwendet wird, um die Frequenzen der Einzellinien linear um eben diese Frequenz zu verschieben. Unter einem unkompensierten Zug kurzer Laserpulse wird ein Lichtsignal mit zeitlich äquidistanten kurzen Lichtpulsen verstanden, dessen Frequenzspektrum Einzellinien aufweist, deren Frequenz nicht einem ganzzahligen Vielfachen des Frequenzabstands der Einzellinien entspricht. Dies bedeutet, dass der Carrier-Envelope-Offset ungleich Null ist. Dieser unkompensierte Zug zeitlich äquidistanter kurzer Laserpulse wird vorzugsweise von einem modengekoppelten Laser empfangen. Unter einem kompensierten Zug kurzer Laserpulse wird ein Lichtsignal mit kurzen zeitlich äquidistanten Lichtsignalen verstanden, dessen Frequenzspektrum Einzellinien umfasst, deren Carrier-Envelope-Offset-Frequenz auf einen vorgegebenen Wert, vorzugsweise auf den Wert Null, stabilisiert ist, d.h. eingestellt ist.

Der Ausdruck "Carrier-Envelope-Offset" wird nachfolgend auch kurz mit "CEO" angeschrieben.

Ein Vorteil der Erfindung gegenüber dem Stand der Technik liegt darin, dass keine aufwendige Regelungselektronik benötigt wird. Zwar ist bei dem vorgeschlagenen Verfahren bzw. der vorgeschlagenen Vorrichtung die Antwortzeit durch die Laufzeit der akustischen Welle in dem akustooptischen Frequenzschieber begrenzt, jedoch kann ein schwingendes Verhalten wie bei einer Regelschleife nicht auftreten. Ferner ist kein regelnder Eingriff in den Laseroszillator erforderlich, so dass Nebeneffekte wie eine Amplitudenmodulation oder eine Störung anderer Laserparameter nicht auftreten. Zwar erfolgt eine statische Modifikation der Pulsdauer; diese ist jedoch zeitlich konstant und einfach kompensierbar.

Die hier vorgeschlagene Vorrichtung und das vorgeschlagene Verfahren benötigen zur Kompensation der Carrier-Envelope-Offset-Frequenz keine Referenzfrequenz, die nicht in dem ursprünglichen unkompensierten Zug kurzer zeitlich äquidistanter Laserpulse enthalten ist. Das Verfahren wird daher als selbstreferenzierend bezeichnet. Ein mit diesem Verfahren erzeugter kompensierter Zug kurzer Laserpulse repräsentiert somit einen selbstreferenzierten Frequenzkamm. Analog wird eine Vorrichtung, die das Verfahren ausführen kann, als Vorrichtung zum Erzeugen eines selbstreferenzierten Frequenzkamms bezeichnet.

Der Vorteil, dass keine regelnden Eingriffe im Laseroszillator notwendig sind, vereinfacht den Betrieb der Vorrichtung sowie die Ausbildung des Lasers. Die Vorrichtung kann mit jedem modengekoppelten Laser genutzt werden.

Für die Ermittlung des CEO-Signals ist vorzugsweise vorgesehen, einen Teil des empfangenen unkompensierten Zugs kurzer Laserpulse in ein Interferometer zu führen. Ein solches Interferometer ist vorzugsweise als f-zu-2f-Interferometer aufgebaut. Die Carrier-Envelope-Offset-Frequenz-Ermittlungseinheit umfasst somit vorzugsweise ein f-zu-2f-Interferometer und einen photoempfindlichen Detektor, der ein Schwebungssignal aufnimmt, aus dem das CEO-Signal abgeleitet wird. Grundsätzlich kann jedes Verfahren und jede Einrichtung genutzt werden, um das CEO-Signal zu ermitteln. Einige Beispiele sind bei H.R. Telle et al., Appl. Phys. B 69, 327 ff. (1999) beschrieben.

Besonders bevorzugt wird das CEO-Signal mittels einer Frequenzfilterung aus dem Schwebungssignal abgeleitet. Hierfür ist vorzugsweise ein Hochfrequenzfilter vorgesehen, der das Schwebungssignal filtert. Besonders bevorzugt ist der Hochfrequenzfilter als Bandpassfilter ausgebildet. Der Hochfrequenzfilter ist auf die erwartete Carrier-Envelope-Offset-Frequenz grob abgestimmt.

Um das Steuersignal zu erzeugen, wird bei einer Ausführungsform das CEO-Signal verstärkt, um hiermit direkt den akustooptischen Frequenzschieber zu treiben.

Der akustooptische Frequenzschieber ist insbesondere so ausgebildet, dass er in einer ersten Beugungsordnung sämtliche Einzellinien des Frequenzkamms um einen festen Frequenzbetrag $\Delta f_s$ verschiebt. Der Betrag $\Delta f_s$ entspricht hierbei der Frequenz, mit der akustische Schwingungen in dem akustooptischen Frequenzschieber angeregt werden. Eine Bragg-Bedingung des Frequenzschiebers kann so gewählt werden, dass die einzelnen Frequenzen um $\Delta f_s$ erhöht ($\Delta f_s > 0$) oder alternativ um $\Delta f_s$ erniedrigt ($\Delta f_s < 0$) werden. Nutzt man ein negatives $\Delta f_s$, so werden sämtliche Einzellinien des Frequenzkamms genau um $f_{CEO}$ kompensiert, wenn die Frequenz des Steuersignals mit der Frequenz des CEO-Signals übereinstimmt, so dass die sich ergebenden Einzellinien des Frequenzkamms ganzzahlige Vielfache der Repetitionsfrequenz des Lasers bzw. des Kehrwerts des zeitlichen Abstands der einzelnen Lichtpulse bzw. der Resonatorumlaufzeit $\tau_R$ des Lasers sind, in dem der Zug kurzer Laserpulse erzeugt ist. Es wird angemerkt, dass außer dem CEO-Signal ebenso eine Spiegelfrequenz, die sich aus der Differenz der Repetitionsfrequenz oder eines Vielfachen hiervon und der Carrier-Envelope-Offset-Frequenz $f_{CEO}$ ergibt, im Schwebungssignal auftritt. Auch diese Spiegelfrequenz $f_m$ kann als CEO-Signal extrahiert und verwendet werden, wobei dann der akustooptische Frequenzschieber mit einer Bragg-Bedingung zu verwenden ist, die ein positives $\Delta f_s$ bewirkt.

Eine verbesserte Rauschunterdrückung im CEO-Signal und ein stabileres Treiben des akustooptischen Frequenzschiebers erreicht man mit einer Ausführungsform, bei der als CEO-Signal das Signal eines Hochfrequenzoszillators verwendet wird, der phasenstarr an das CEO-Signal gekoppelt wird. Vorzugsweise wird ein spannungsgesteuerter Oszillator verwendet. Bei einer solchen Ausführungsform umfasst die Carrier-Envelope-Offset-Frequenz-Ermittlungseinheit einen, vorzugsweise spannungsgesteuerten, Hochfrequenzoszillator, dessen Ausgangssignal als CEO-Signal dient, wobei der Hochfrequenzoszillator über eine Koppelschaltung phasenstarr an das Schwebungssignal oder gefilterte Schwebungssignal gekoppelt ist. Die Kopplung kann beispielsweise über einen Phasendetektor mit einem Tiefpassfilter sowie einen Proportional-Integralregler erfolgen, der den spannungsgesteuerten Oszillator antreibt. Diese Ausführungsform führt insgesamt zu einer höheren Amplitudenstabilität des an dem Phasenschieber gebeugten optischen Signals, welche das Nutzsignal ist, das erzeugt wird. Ferner wird ein Rauschen in dem kompensierten Zug kurzer Laserpulse (dem Nutzsignal) unterdrückt.

Ein Vorteil der beschriebenen Ausführungsformen ist, dass es möglich ist, in dem Ausgangssignal die Carrier-Envelope-Offset-Frequenz auf Null zu kompensieren. Hierbei wird das CEO-Signal "direkt" als Steuersignal verwendet, d.h. das Steuersignal wird mit der Frequenz erzeugt, die jener des CEO-Signals entspricht. Ebenso ist es jedoch bei einer weiteren Ausführungsform auch möglich, eine gewünschte vorgewählte Carrier-Envelope-Offset-Frequenz für die Einzellinien des Frequenzkamms einzustellen. Hierzu wird das Steuersignal durch eine Frequenzmischung eines Offsetfrequenzsignals, welches eine Offset-Frequenz aufweist, mit dem CEO-Signal erzeugt. Die Steuereinheit ist somit ausgebildet, ein Offsetfrequenzsignal zu empfangen, welches eine Offset-Frequenz aufweist, und umfasst eine Mischvorrichtung, um das Steuersignal durch eine Frequenzmischung des Offsetfrequenzsignals mit dem CEO-Signal zu erzeugen. Insbesondere bei einer hochpräzisen Frequenzmessung können somit die Einzellinien des Frequenzkamms gezielt verschoben werden, so dass diese Einzellinien im kompensierten Zug kurzer Laserpulse beispielsweise eine Carrier-Envelope-Offset-Frequenz aufweisen, die der vorgegebenen Offset-Frequenz entspricht.

Die Offset-Frequenz kann auf nahezu beliebige Weise erzeugt werden. Bei einer Ausführungsform ist vorgesehen, dass die Offset-Frequenz aus der Repetitionsfrequenz des Lasers abgeleitet wird. Hierzu ist ein weiterer photoempfindlicher Detektor (zusätzlich zu dem in der Carrier-Envelope-Offset-Frequenz-Erkennungseinheit vorgesehenen Detektor zum Erfassen des Schwebungssignals) vorgesehen, um aus dem (unkompensierten oder kompensierten) Zug kurzer Laserpulse ein elektronisches Repetitionssignal, welches die Repetitionsfrequenz der kurzen Laserpulse repräsentiert, zu erzeugen, und ist eine Teilereinheit vorgesehen, um durch eine Teilung des elektronischen Repetitionssignals das Offsetfrequenzsignal abzuleiten. Andere Ausführungsformen können vorsehen, dass aus dem elektronisch abgeleiteten Repetitionssignal auf andere Weise elektronisch das Offsetfrequenzsignal abgeleitet wird.

Um eine optimale Funktionsweise einer erfindungsgemäßen Vorrichtung mit einem beliebigen modengekoppelten Laser nutzen zu können, ist es zweckmäßig, über eine Dispersionsanpasseinrichtung in dem Laser, welche ungeregelt betrieben wird, die Carrier-Envelope-Offset-Frequenz grob an die Mittenfrequenz des akustooptischen Frequenzschiebers anzupassen. Vorzugsweise wird die CEO-Frequenz so angepasst, dass sie der Mittenfrequenz des akustooptischen Frequenzschiebers entspricht. Eine Anpassung der Carrier-Envelope-Offset-Frequenz im Laser entspricht einer Anpassung des akustooptischen Frequenzschiebers, d.h. einer Auswahl des akustooptischen Frequenzschiebers in der Weise, dass dessen Mittenfrequenz an die Carrier-Envelope-Offset-Frequenz des modengekoppelten Lasers angepasst wird. Um einen ausreichenden Abstand der Carrier-Envelope-Offset-Frequenz zu der Repetitionsfrequenz im Schwebungssignal eines f-zu-2f-Interferometers zu erreichen, wird die CEO-Frequenz des Lasers vorzugsweise auf etwa $\left(\left(\dfrac{2n+1}{4}\right) \cdot f_{rep}\right)$ eingestellt, wobei $n = 0, 1, 2, \ldots$ und $f_{rep}$ die Repetitionsfrequenz der Laserpulse ist.

Bei einer Beugung des Zuges kurzer Laserpulse an dem akustooptischen Frequenzschieber tritt eine räumliche wellenlängenabhängige Auffächerung (Winkeldispersion) in der ersten Beugungsordnung aufgrund der wellenlängenabhängigen Beugung auf. Eine solche räumliche Auffächerung wird hier als räumlicher Chirp bezeichnet. Um diesen zu kompensieren, sind vorzugsweise in unmittelbarer Nähe des akustooptischen Frequenzschiebers ein oder mehrere winkeldispersive Elemente angeordnet, welche den räumlichen Chirp zumindest der ersten Beugungsordnung kompensieren. Das eine oder die mehreren winkeldispersiven Elemente können Prismen, Gitter oder sogenannte Grisms einzeln oder in Kombination umfassen. Für eine Kompensation in der ersten Beugungsordnung ist es vorteilhaft, wenn das oder die winkeldispersiven Elemente, beispielsweise ein Kompensationsprisma, möglichst direkt hinter dem Frequenzschieber angeordnet sind. Dies führt jedoch dazu, dass die nullte Ordnung eine wellenlängeriabhängige Auffächerung aufweist. Ist eine möglichst gute spektrale Strahlhomogenität in beiden Beugungsordnungen gewünscht, so kann es vorteilhaft sein, das oder die winkeldispersiven Elemente, beispielsweise das Kompensationsprisma, in einem größeren Abstand zum Frequenzschieber in den Strahlengang einzufügen, so dass nur der in erster Ordnung gebeugte kompensierte Zug kurzer Laserpulse hinsichtlich des räumlichen Chirps kompensiert wird.

Bei einer besonders bevorzugten Ausführungsform der Erfindung sind die einzelnen Komponenten faseroptisch aufgebaut. So kann die Vorrichtung einfach mit einem Faserlaser verwendet werden. Aus dem Stand der Technik sind fasergekoppelte Varianten von Frequenzschiebern bekannt. Ebenso kann ein f-zu-2f-Interferometer faseroptisch aufgebaut werden. Hierdurch wird ein einfacher und kompakter Aufbau zur Stabilisierung des Lasersignals geschaffen.

Soll die erfindungsgemäße Vorrichtung mit einem modengekoppelten Laser genutzt werden, dessen Frequenzkamm keine vollständige Oktave an Einzellinien bzw. Moden umfasst, so ist bei einer Ausführungsform vorgesehen, dass das f-zu-2f-Interferometer ein zusätzliches optisches Element enthält, welches mittels eines nichtlinearen optischen Effekts zu einer Frequenzverbreiterung des Frequenzkamms führt, wobei beispielsweise durch Vierwellenmischung weitere höherenergetische Linien des Frequenzkamms erzeugt werden. Als optisches Element kann beispielsweise eine mikrostrukturierte photonische Kristallfaser (PCF) verwendet werden.

Um Gruppenlaufzeitdispersionseffekte, die bei der Beugung an dem akustooptischen Frequenzschieber auftreten, zu kompensieren, d.h. eine Pulsdauerveränderung zu kompensieren, ist es vorteilhaft vorzusehen, dass eine oder mehrere Sequenzen von Prismen und/oder Gittern und/oder gechirpten Spiegeln in dem Strahlengang des unkompensierten Zugs kurzer Laserpulse und/oder der ersten Beugungsordnung und/oder der nullten Beugungsordnung des akustooptischen Frequenzschieber so angeordnet sind, dass dem unkompensierten Zug kurzer Laserpulse und/oder der ersten Beugungsordnung und/oder der nullten Beugungsordnung eine negative Gruppenlaufzeitdispersion angepasst an die Gruppenlaufzeitdispersion des akustooptischen Frequenzschiebers aufgeprägt wird, um die Gruppenlaufzeitdispersion des akustooptischen Frequenzschiebers zu kompensieren. Der unkompensierte Zug kurzer Laserpulse und/oder die erste Beugungsordnung und/oder die nullte Beugungsordnung des akustooptischen Frequenzschiebers werden über eine Sequenz von Prismen und/oder Gittern und/oder gechirpten Spiegeln geführt werden, die eine negative Gruppenlaufzeitdispersion angepasst zu der Gruppenlaufzeitdispersion des akustooptischen Frequenzschiebers aufprägen, um die Gruppenlaufzeitdispersion des akustooptischen Frequenzschiebers zu kompensieren. Eine Kompensation des unkompensierten Zugs kurzer Laserpulse vor einem Führen auf den akustooptischen Frequenzschieber bietet den Vorteil, das sowohl die erste als auch die nullte Beugungsordnung, die aus dem akustooptischen Frequenzschieber austreten, hinsichtlich der Gruppenlaufzeitdispersion kompensiert sind.

Kurzbeschreibung der Zeichnungen

Nachfolgend wird die Erfindung unter Bezugnahme auf Figuren näher erläutert. Hierbei zeigen:

Fig. 1    eine schematische Darstellung einer ersten, vereinfachten Ausführungsform der Erfindung;

Fig. 2    eine schematische Darstellung einer zweiten, vereinfachten Ausführungsform der Erfindung;

Fig. 3a, 3b    schematische Darstellungen zur Erläuterung der Kompensation eines räumlichen Chirps;

Fig. 4    eine weitere schematische Darstellung einer Ausführungsform der Erfindung, bei der eine verbesserte Rauschunterdrückung im Ausgangssignal erreicht wird;

Fig. 5    eine schematische Darstellung einer Ausführungsform einer erfindungsgemäßen Vorrichtung, bei der die Carrier-Envelope-Offset-Frequenz der Einzellinien des Frequenzkamms des kompensierten Zugs kurzer Laserpulse variabel vorgewählt werden kann; und

Fig. 6    eine schematische Darstellung einer Ausführungsform, bei der dispersive Gruppenlaufzeiteffekte vorkompensiert werden.

Beschreibung der bevorzugten Ausführungsformen der Erfindung

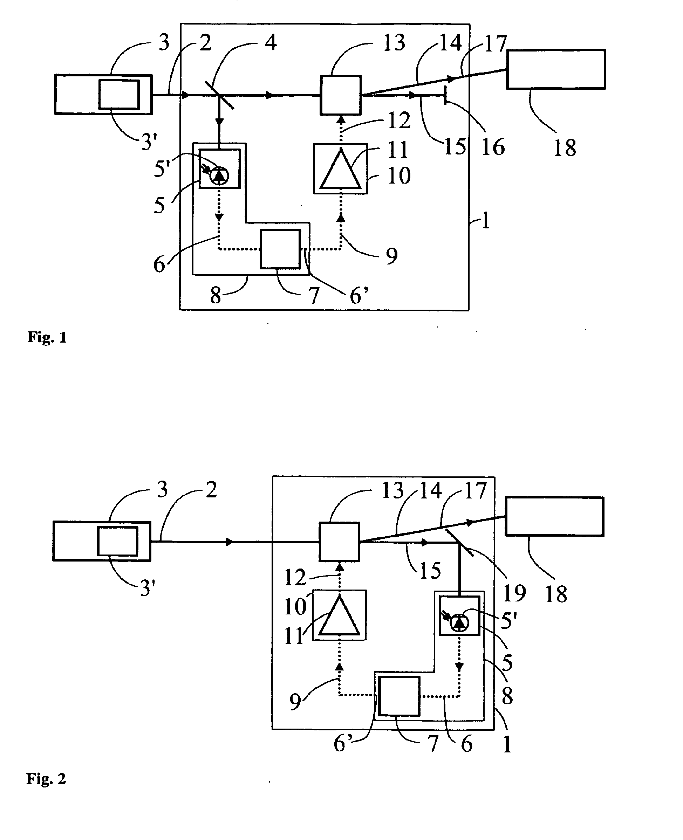

In Fig. 1 ist schematisch eine Vorrichtung zum Erzeugen eines selbstreferenzierten Frequenzkamms bzw. zum Erzeugen eines kompensierten Zugs 17 zeitlich äquidistanter kurzer Laserpulse dargestellt, bei denen die Einzellinien des Frequenzkamms eine stabilisierte Carrier-Envelope-Offset-Frequenz aufweisen. Eine solche Vorrichtung wird im Folgenden als Vorrichtung zum Erzeugen eines selbstreferenzierten Frequenzkamms bezeichnet. Die Vorrichtung 1 ist ausgebildet, um einen unkompensierten Zug 2 zeitlich äquidistanter kurzer Laserpulse eines modengekoppelten Lasers 3 zu empfangen. Bei dem modengekoppelten Laser kann es sich beispielsweise um einen Titan:Saphir-Laser oder einen Erbium-Faserlaser handeln. Der unkompensierte Zug 2 kurzer Laserpulse stellt bei einer Betrachtung im Frequenzraum einen Frequenzkamm äquidistant beabstandeter Einzellinien, die auch als Moden bezeichnet werden, dar. Die Einzellinien des Frequenzkamms weisen einen Frequenzabstand $\Delta f$ auf, welcher dem Kehrwert der Umlaufzeit eines der kurzen Pulse im Resonator des modengekoppelten Lasers 3 entspricht. Die Frequenzen $f_i$ der Einzellinien sind jedoch keine ganzzahligen Vielfachen des Frequenzabstands $\Delta f$, welcher der Repetitionsfrequenz $f_{rep}$ der kurzen Laserpulse entspricht ($f_{rep} = \Delta f$). Vielmehr weisen alle Einzellinien einen zusätzlichen Frequenzversatz auf. Diese Versatz-Frequenz wird als Carrier-Envelope-Offset (CEO)-Frequenz $f_{CEO}$ bezeichnet. Diese Carrier-Envelope-Offset-Frequenz $f_{CEO}$ ist bei einem modengekoppelten Laser, in dem diese nicht über spezielle Regelmechanismen stabilisiert wird, zeitlich nicht konstant. Dies bedeutet, dass die Carrier-Envelope-Offset-Frequenz zeitlich fluktuiert. Hierfür sind unterschiedliche Umgebungseinflüsse, wie beispielsweise Temperatur, Variation der Pumpleistung, Luftdruck usw., im modengekoppelten Laser 3 verantwortlich. Zweck der Vorrichtung 1 zum Erzeugen eines selbstreferenzierten Frequenzkamms ist es, den Frequenzversatz aufgrund der Carrier-Envelope-Offset-Frequenz zu stabilisieren (also stabil einzustellen) und vorzugsweise auf Null oder einen anderen vorgegebenen Wert zu kompensieren. Hierfür wird bei der in Fig. 1 dargestellten Ausführungsform ein Teil des Lichts des unkompensierten Zugs 2 kurzer Laserpulse an einem Strahlteilerspiegel 4 in ein f-zu-2f-Interferometer 5 ausgekoppelt.

Überspannt der Frequenzkamm des unkompensierten Zugs 2 kurzer Laserpulse keine Oktave, so wird eine Frequenzverbreiterung des Frequenzkamms vorgenommen. Hierfür kann beispielsweise eine mikrostrukturierte photonische Kristallfaser genutzt werden. Über Vierwellenmischung können so höher- und niederenergetische Linien in dem Frequenzkamm erzeugt werden, für deren Frequenzen $f_i$ ebenfalls gilt: $f_i = i \cdot \Delta f + f_{CEO}$ Auf diese Weise wird, falls notwendig, ein Freqeunzkamm erzeugt, der mindestens eine Oktave überspannt. Zum Ermitteln der Carrier-Envelope-Offset-Frequenz wird eine niederenergetische Einzellinie mit in einem optischen Element mittels eines nicht linearen optischen Effekts frequenzverdoppelt und mit einer hochenergetischen (nichtfrequenzverdoppelten) Einzellinie des Frequenzkamms auf einem photoempfindlichen Detektor 5' zur Interferenz gebracht. Die hochenergetische Einzellinie des Frequenzkamms weist hierbei ungefähr die doppelte Frequenz der niederenergetischen Einzellinie auf, die frequenzverdoppelt wird. Auf dem photoempfindlichen Detektor 5', welcher beispielsweise eine Photodiode oder ein Photomultiplier (Sekundärelektronenvervielfacher) sein kann, wird ein Schwebungssignal 6 detektiert, dessen Frequenz der Carrier-Envelope-Offset-Frequenz entspricht. Ebenso kann ein Schwebungssignal einer Spiegelfrequenz $f_m$ gemessen werden, welches der Differenz-Summenfrequenz der Repetitionsfrequenz des Lasers $f_{rep}$ und der Carrier-Envelope-Offset-Frequenz $f_{CEO}$ entspricht, d.h. $f_m = n \cdot f_{rep} \pm F_{CEO}$, wobei gilt: n=1,2,... Da die Carrier-Envelope-Offset-Frequenz im Radiofrequenzbereich liegt, kann diese mit dem photoempfindlichen Detektor 5' direkt gemessen werden. Das so erhaltene Schwebungssignal 6 wird einem Hochfrequenzfilter 7, der vorzugsweise als einfacher Bandpassfilter ausgebildet ist, zugeführt. Hierdurch wird aus dem Schwebungssignal die Carrier-Envelope-Offset-Frequenz selektiert bzw. abgeleitet. Das f-zu-2f-Interferometer 5 und der Hochfrequenzfilter 7 bilden zusammen eine Carrier-Envelope-Offset-Frequenz-Ermittlungseinheit 8. Diese liefert als elektronisches Ausgangssignal ein so genanntes CEO-Signal 9.

In allen Zeichnungen sind elektronische Signale mittels gepunkteter Linien und Lichtsignale mittels durchgezogener Linien dargestellt.

Das CEO-Signal 9 wird einer Steuereinheit 10 zugeführt. Diese umfasst in der dargestellten Ausführungsform einen Verstärker 11, um ein Steuersignal 12 für einen akustooptischen Frequenzschieber 13 zu erzeugen. Das Steuersignal 12 ist ein Hochfrequenzsignal, welches die Carrier-Envelope-Offset-Fequenz $f_{CEO}$ aufweist (alternativ die Spiegelfrequenz $f_m$). Der Anteil des unkompensierten Zugs 2 kurzer Laserpulse, der den Strahlteilerspiegel 4 passiert, wird dem akustooptischen Frequenzschieber 13 zugeführt. Dieser wird so betrieben, dass in einer ersten Beugungsordnung 14 austretendes Licht um einen Frequenzbetrag $-\Delta f_s$ verschoben wird. Dies bedeutet, dass die Frequenzen der Einzellinien des Frequenzkamms des Zugs 2 kurzer Laserpulse jeweils um die Frequenz erniedrigt werden, mit der der akustooptische Frequenzschieber 13 angesteuert wird. Da das Steuersignal 12 die Carrier-Envelope-Offset-Frequenz $f_{CEO}$ aufweist, werden alle Einzellinien um genau diese Carrier-Envelope-Offset-Frequenz erniedrigt. Somit erfolgt eine Kompensation der Einzellinien jeweils genau um die Carrier-Envelope-Offset-Frequenz $f_{CEO}$, so dass die Einzellinien nun eine Frequenz aufweisen, die ein ganzzahliges Vielfaches der Repetitionsfrequenz $f_{rep}$ sind. Es gilt somit für die Einzellinien des Frequenzkamms eines kompensierten Zugs 17 kurzer Laserpulse: $f_i = i \, f_{rep}$, wobei i eine natürliche Zahl ist. Die nullte Ordnung 15 des Zugs 2 kurzer Laserpulse wird auf einen Strahlstopper 16 geführt.

Der aus der Vorrichtung 1 zum Erzeugen eines selbstreferenzierten Frequenzkamms unter der ersten Beugungsordnung 14 austretende kompensierte Zug 17 kurzer Laserpulse ist somit hinsichtlich der Carrier-Envelope-Offset-Frequenz kompensiert. Dies bedeutet, dass eine feste Phasenbeziehung für alle Laserpulse zwischen der Einhüllenden und dem darunterliegenden elektrischen Feld gegeben ist. Der entsprechend kompensierte Zug 17 kurzer Laserpulse kann einer Anwendung 18 zugeführt werden. Hierbei kann es sich um eine beliebige Anwendung handeln, beispielsweise um einen optischen Verstärker. Bei der Anwendung kann es sich auch um eine Spektroskopieanordnung handeln, um eine absolute Frequenzmessung auszuführen. Eine Vielzahl weiterer Anwendungen ist denkbar, beispielsweise eine Erzeugung kurzer Laserpulse.

In Fig. 2 ist eine weitere Ausführungsform einer Vorrichtung 1 zum Erzeugen eines selbstreferenzierten Frequenzkamms schematisch dargestellt. In allen Figuren sind identische technische Merkmale mit identischen Bezugszeichen versehen.

Die Ausführungsform nach Fig. 2 unterscheidet sich von jener nach Fig. 1 dadurch, dass der zur Ermittlung der Carrier-Envelope-Offset-Frequenz $f_{CEO}$ verwendete Anteil des unkompensierten Zugs 2 kurzer Laserpulse nicht vor dem Auftreffen auf den akustooptischen Frequenzschieber 13 ausgekoppelt wird. Vielmehr wird die nullte Beugungsordnung 15 über einen Spiegel 19 auf das f-zu-2f Interferometer 5 der CEO-Ermittlungseinheit 8 gelenkt. Ansonsten gleicht die Ausführungsform der nach Fig. 1. Ein Vorteil dieser Ausführungsform ist, dass die vorhandene Leistung in dem unkompensierten Zug 2 kurzer Laserpulse effizienter ausgenutzt wird.

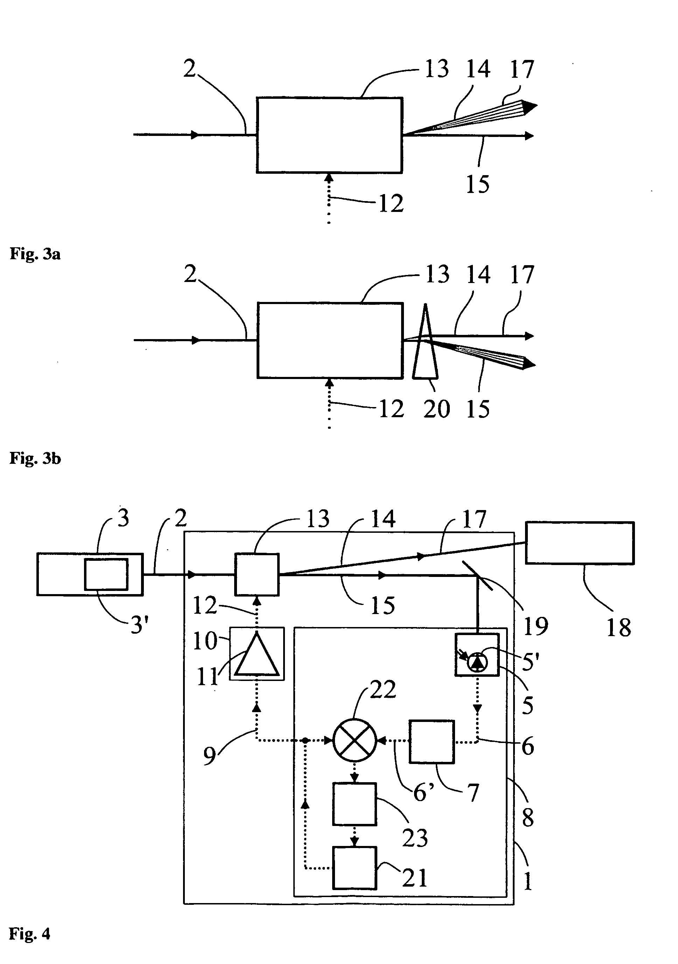

Bei der schematischen Darstellung nach Fig. 1 und Fig. 2 ist noch nicht berücksichtigt, dass die Beugung an dem akustooptischen Frequenzschieber 13 wellenlängenabhängig erfolgt. Dies bedeutet, dass die unterschiedlichen Frequenzanteile des kompensierten Zugs 17 kurzer Laserpulse unter der ersten Beugungsordnung 14 unter leicht unterschiedlichen Richtungen aus dem akustooptischen Frequenzschieber 13 austreten. Dieses ist in Fig. 3a schematisch dargestellt. Um diese räumliche Auffächerung, die auch als räumlicher Chirp bezeichnet wird, zu kompensieren, ist in Fig. 3b hinter dem akustooptischen Frequenzschieber 13 ein winkeldispersives Element, das hier als Kompensationsprisma 20 ausgeführt ist, eingefügt. Das Kompensationsprisma 20 ist vorzugsweise unmittelbar hinter dem akustooptischen Frequenzschieber 13 angeordnet, um eine möglichst gute Kompensation in dem kompensierten Zug 17 kurzer Laserpulse zu erreichen. Hierdurch wird jedoch die nullte Ordnung 15 dahingehend beeinflusst, dass diese nun hinsichtlich der verschiedenen Frequenzen räumlich aufgespalten wird. Wird eine Strahlhomogenität sowohl in der nullten Beugungsordnung 15 als auch in der ersten Beugungsordnung 14 angestrebt, so kann das Kompensationsprisma 20 auch in einem größeren Abstand zu dem akustooptischen Frequenzschieber 13 angeordnet werden, so dass die nullte Ordnung nicht mehr durch das Kompensationsprisma hindurchtritt.

Eine winkeldispersive Kompensation, gleich oder ähnlich zu der nach Fig. 3b, ist vorzugsweise in allen Ausführungsformen, die in den Fig. 1, 2 sowie 4 bis 6 dargestellt sind, vorhanden, jedoch dort lediglich aus Gründen der Vereinfachung nicht dargestellt. Es versteht sich, das auch andere winkeldispersive Elemente, wie Gitter oder Grisms, einzeln oder in Kombination (auch mit Prismen) zur Kompensation verwendet werden können.

In Fig. 4 ist eine weitere Ausführungsform einer Vorrichtung 1 zum Erzeugen eines selbstreferenzierten Frequenzkamms dargestellt. Diese unterscheidet sich von der Ausführungsform nach Fig. 2 dadurch, dass das CEO-Signal mittels eines Oszillators erzeugt ist, der phasenstarr an das Schwebungssignal 6 bzw. gefilterte Schwebungssignal 6' angekoppelt ist. Die Carrier-Envelope-Offset-Frequenz-Ermittlungseinheit 8 umfasst hierfür einen Phasendetektor 22 sowie einen Proportional-Integral-Regler 23, der den als spannungsgesteuerten Oszillator ausgebildeten Oszillator 21 phasenstarr an das Schwebungssignal 6 bzw. gefilterte Schwebungssignal 6' ankoppelt. Somit wird das CEO-Signal 9 über eine Phase-Lock-Loop-Schaltung amplitudenstabilisiert. Hierdurch wird eine stabilere Ausführung des akustooptischen Frequenzschiebers 13 und somit eine Reduktion eines Rauschens im kompensierten Zug 17 kurzer Laserpulse erreicht.

Angemerkt wird zur Ausführungsform nach Fig. 4, dass die Carrier-Envelope-Offset-Frequenzermittlungseinheit 8 selbstverständlich ausgebildet sein kann, wie die entsprechende Carrier-Envelope-Offset-Frequenzermittlungseinheit 8 nach Fig. 2 ausgeführt ist.

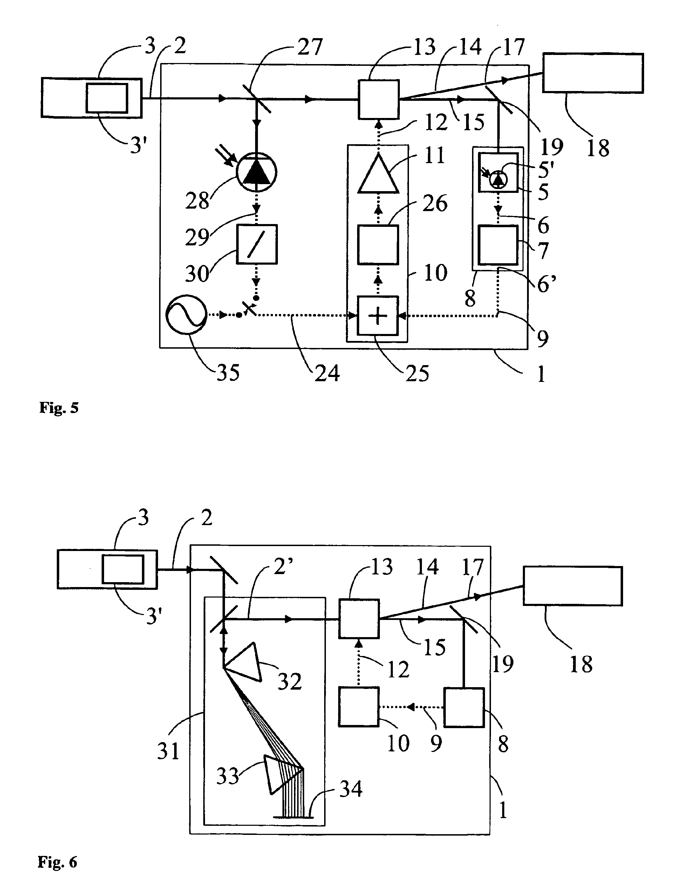

In Fig. 5 ist eine Ausführungsform einer Vorrichtung 1 zum Erzeugen eines kompensierten Zugs 17 kurzer Laserpulse dargestellt, bei der eine Carrier-Envelope-Offset-Frequenz der Einzellinien im Frequenzkamm des kompensierten Zugs 17 kurzer Laserpulse fest vorgewählt werden kann. Abweichend von Ausführungsformen nach Fig. 3 oder Fig. 4 ist die Steuereinheit 10 ausgebildet, zusätzlich zu dem CEO-Signal 9 ein Offsetfrequenzsignal 24 zu empfangen und in einer Frequenzmischeinheit 25 eine Frequenzmischung zwischen dem Offsetfrequenzsignal 24 und dem CEO-Signal 9 auszuführen. Die Frequenzmischeinheit 25 ist beispielsweise als Frequenzaddierer ausgebildet. Die Frequenzmischeinheit 25 kann jedoch auch jede beliebige andere Einheit zum Mischen von Frequenzen elektronischer Signale sein. Das Ausgangssignal der Frequenzmischeinheit 25 wird über einen als Bandpass ausgebildeten weiteren Hochfrequenzfilter 26 geführt und anschließend in dem Verstärker 11 verstärkt, um das Steuersignal 12 zu erzeugen.

Das Offsetfrequenzsignal 24 kann entweder in einem Oszillator 35, der auch als Frequenzsynthesizer ausgebildet sein kann, erzeugt werden. Alternativ kann das Offsetfrequenzsignal 24 aus der Repetitionsfrequenz des Zugs 2 unkompensierter kurzer Laserpulse abgeleitet werden. (Alternativ ist auch eine Ableitung aus dem kompensierten Zug 17 kurzer Laserpulse möglich.) Hierfür ist im Strahlengang ein Strahlteilerspiegel 27 vorgesehen, der einen Teil des Lichts des Zugs 2 kurzer Laserpulse auskoppelt und auf einen weiteren photoempfindlichen Detektor 28 lenkt. Dieser weitere photoempfindliche Detektor 28 ist zwar nicht in der Lage, die Schwingungen des elektrischen Felds aufzulösen, welche im Terahertzbereich liegen, es ist aber mit dem weiteren photoempfindlichen Detektor 28 möglich, die Repetitionsfrequenz $f_{rep}$ des modengekoppelten Lasers, d.h. der einzelnen Pulse des Zugs 2 kurzer Laserpulse zu erfassen. Ein Repetitionssignal 29, das die Repetitionsfrequenz repräsentiert, kann über eine Teilereinheit 30 in das Offsetfrequenzsignal 24 überführt werden. Die Teilereinheit 30 kann hierbei jede rationale Teilung der Repetitionsfrequenz frequenzstabilisiert auf die Repetitionsfrequenz $f_{rep}$ ausführen.

Bei einer Beugung des Zugs 2 kurzer Laserpulse an dem akustooptischen Frequenzschieber 13 können insbesondere, wenn die einzelnen Laserpulse in dem Zug 2 kurzer Laserpulse eine Pulsbreite < 100 fs aufweisen, dispersive Gruppenlaufzeiteffekte auftreten.

Um diese vorzukompensieren, ist in Fig. 6 schematisch eine Kompensationseinheit 31 dargestellt. Hierbei wird der unkompensionierte Zug 2 kurzer Laserpulse aus dem Strahlengang zunächst ausgekoppelt und über eine Anordnung von Prismen 32, 33 geführt und an einem Reflektor 34 durch die Prismen 33, 32 zurückreflektiert. Bei der vereinfacht dargestellten Kompensationseinheit 31 sind zwei Prismen 32, 33 dargestellt und repräsentieren stellvertretend eine Sequenz von Prismen. Alternativ kann eine Sequenz von Gittern und/oder gechirpten Spiegeln oder eine Kombination aus Prismen und/oder Gittern und/oder gechirpten Spiegeln verwendet werden. Diese werden so angeordnet, dass dem Zug 2 kurzer Laserpulse eine negative Gruppenlaufzeitdispersion aufgeprägt wird. Der aus der Kompensationseinheit 31 austretende Zug 2' kurzer Laserpulse ist somit vor einem Auftreffen auf den akustooptischen Frequenzschieber 13 hinsichtlich der Gruppentaufzeitdispersion vorkompensiert, so dass die in dem akustooptischen Frequenzschieber 13 auftretende positive Gruppenlaufzeitdispersion dazu führt, dass der unter der ersten Beugungsordnung 14 austretende kompensierte Zug 17 kurzer Laserpulse, der hinsichtlich der Carrier-Envelope-Offset-Frequenz kompensiert ist, hinsichtlich einer Gruppenlaufzeitdispersion durch die Vorrichtung 1 zum Erzeugen eines selbstreferenzierten Frequenzkamms nicht negativ beeinflusst wird. Dies bedeutet, dass keine zeitliche Streckung der Pulse auftritt. Es ergibt sich für den Fachmann, dass bei dieser Ausführungsform auch die nullte Ordnung hinsichtlich der Gruppenlaufzeitdispersion kompensiert ist.

Bei anderen Ausführungsformen kann die Kompensation hinsichtlich der Gruppenlaufzeitdispersion auch nach dem Austritt aus dem akustooptischen Frequenzschieber in der ersten und/oder nullten Beugungsordnung erfolgen. Solche Kompensationseinheiten sind analog zu der nach Fig. 6 aufgebaut.

Es versteht sich, dass die Kompensationseinheit 31 oder eine oder mehrere analoge Kompensationseinheiten, die hinter dem akustooptischen Frequenzschieber angeordnet sind, in jede der dargestellten Ausführungsformen nach Figuren 1, 2, 4 und 5 eingefügt werden können. Lediglich aus Gründen der Vereinfachung und Übersichtlichkeit der Darstellung ist die Kompensationseinheit 31 in den anderen Ausführungsformen nicht mit dargestellt. Selbiges betrifft die Kompensation hinsichtlich des räumlichen Chirps, die im Zusammenhang mit den Figuren 3a und 3b beschrieben ist.

Die dargestellten Ausführungsformen sind lediglich schematisch dargestellt. Bevorzugte Ausführungsformen werden faseroptisch ausgebildet. Dies bedeutet, dass die einzelnen Komponenten weitestgehend faseroptisch ausgebildet sind und in einen faseroptischen Aufbau eingespleisst werden können. Dies betrifft die einzelnen dargestellten Einheiten, wie die Carrier-Envelope-Offset-Frequenzermittlungseinheit 8, den akustooptischen Frequenzschieber 13, die Einheit zum Ableiten der Offsetfrequenz, sofern diese aus der Repetitionsfrequenz des Zugs 2 kurzer Laserpulse erfolgt, oder die Kompensationseinheit 31 zum Kompensieren der Gruppenlaufzeitdispersion im akustooptischen Frequenzschieber.

In den Figuren ist die Vorrichtung 1 zum Erzeugen eines selbstreferenzierten Frequenzkamms als eigenständige Vorrichtung beschrieben, die separat von einem modengekoppelten Laser 3 ausgebildet ist. Es versteht sich für den Fachmann, dass der modengekoppelte Laser 3, insbesondere bei einem faseroptischen Aufbau, in die Vorrichtung integriert werden kann. Insbesondere bei solchen Ausführungsformen ist der Laser 3 vorzugsweise so ausgebildet, dass die Carrier-Envelope-Offset-Frequenz über ein oder mehrere dispersive Elemente, das oder die hier aus Vereinfachungsgründen als Dispersionsanpasseinrichtung 3' bezeichnet werden, in dem Resonator des jeweiligen modengekoppelten Lasers grob an eine Mittenfrequenz des akustooptischen Frequenzschiebers 13 angepasst ist oder werden kann, der die Kompensation hinsichtlich der Carrier-Envelope-Offset-Frequenz ausführt. Die Dispersionsanpasseinrichtung 3' kann beispielsweise Prismen, insbesondere Keilprismen, umfassen. Alternativ kann der akustooptische Frequenzschieber 13 entsprechend angepasst an die Carrier-Envelope-Offset-Frequenz des Lasers 3 ausgewählt werden. Da jedoch die Carrier-Envelope-Offset-Frequenz von einer Vielzahl von Umgebungseinflüssen abhängig ist, die optische Elemente im Resonator des modengekoppelten Lasers beeinflussen, ist es zu bevorzugen, eine grobe Anpassung der Carrier-Envelope-Offset-Fequenz im jeweiligen modengekoppelten Laser vorzunehmen. Diese Anpassung erfolgt jedoch nicht geregelt oder über eine fortwährende Regelung, sondern ist nur einmalig oder bei stärkeren Änderungen der Umgebungsbedingungen in größeren Zeitintervallen notwendig.

Die Carrier-Envelope-Offset-Frequenz wird hierbei vorzugsweise so gewählt, dass sie

$$\frac{(2n+1)}{4} \cdot f_{rep}$$ entspricht. Dadurch wird sichergestellt, dass die Carrier-Envelope-Offset-Frequenz als Schwebungssignal von der ebenfalls auftretenden Spiegelfrequenz sowie anderen im Schwebungssignal auftretenden Frequenzen zuverlässig unterschieden bzw. identifiziert und über einen einfachen Hochfrequenzfilter isoliert werden kann.

Ein besonderer Vorteil der Erfindung liegt darin, dass keine Regelungen erforderlich sind, die mechanische Komponenten des Resonators oder die Pumpleistung des laseraktiven Mediums beeinflussen. Vielmehr erfolgt die Kompensation hinsichtlich der Carrier-Envelope-Offset-Frequenz $f_{CEO}$ vollständig abgetrennt (mit Ausnahme der Grobanpassung der Carrier-Envelope-Offset-Frequenz an die Frequenz des akustooptischen Frequenzschiebers, wie oben erwähnt) unabhängig vom Betrieb des modengekoppelten Lasers. Hierdurch wird ein einfacherer, kostengünstiger Aufbau der Gesamtvorrichtung ermöglicht, welche einen selbstreferenzierten Frequenzkamm bereitstellt. Ein besonderer Vorteil liegt ferner darin, dass die Carrier-Envelope-Offset-Frequenz auf Null kompensiert werden kann, was für viele Anwendungen notwendig oder zumindest vorteilhaft ist.

Es versteht sich, dass einige spezielle Details des optischen Aufbaus nicht erwähnt sind, die dem Fachmann jedoch allgemein geläufig sind. Diese können Spiegel, Lambda-Halbe-Plättchen, Polarisationsfilter usw. umfassen, um eine optimale Strahlführung in den einzelnen Einheiten der Vorrichtung zu ermöglichen.

**Patentansprüche**

1. Verfahren zum Erzeugen eines hinsichtlich zeitlicher Schwankungen der Carrier-Envelope-Offset-Frequenz ($f_{CEO}$) kompensierten Zuges (17) zeitlich äquidistanter kurzer Laserpulse, dessen Spektrum einen Frequenzkamm äquidistant beabstandeter Einzellinien aufweist, deren Carrier-Envelope-Offset-Frequenz ($f_{CEO}$) auf einen zeitlich gleichbleibenden vorgegebenen Wert eingestellt ist, mit folgenden Schritten:

   - Empfangen eines unkompensierten Zuges (2) zeitlich äquidistanter kurzer Laserpulse;
   - Leiten des unkompensierten Zuges (2) auf einen akustooptischen Frequenzschieber (13);
   - Ermitteln eines Carrier-Envelope-Offset-Signals (9), das eine Frequenz aufweist, die der Carrier-Envelope-Offset-Frequenz ($f_{CEO}$) von Einzellinien im Frequenzkamm des unkompensierten Zuges (2) gleich ist;
   - wobei entweder ein Anteil des unkompensierten Zuges (2) vor seinem Auftreffen auf den akustooptischen Frequenzschieber (13) ausgekoppelt und zur Ermittlung des Carrier-Envelope-Offset-Signals (9) verwendet wird, oder die am Ausgang des akustooptischen Frequenzschiebers (13) austretende nullte Beugungsordnung (15) des unkompensiereten Zuges zur Ermittlung des Carrier-Envelope-Offset-Signals (9) verwendet wird;
   - Ableiten eines Steuersignals (12) mit einer Frequenz ($f_s$) aus diesem Carrier-Envelope-Offset-Signal (9);
   - Ansteuern des akustooptischen Frequenzschiebers (13) mit diesem Steuersignal (12), so dass an dessen Ausgang in der ersten Beugungsordnung (14) der hinsichtlich zeitlicher Schwankungen der Carrier-Envelope-Offset-Frequenz ($f_{CEO}$) kompensierte Zug (17) zeitlich äquidistanter kurzer Laserpulse erzeugt wird, wobei die Einzellinien des dem kompensierten Zug (17) zugehörigen Frequenzkamms um die Frequenz ($f_s$) des Steuersignals (12) verschoben sind, bezogen auf die Einzellinien des unkompensierten Zuges (2).

2. Verfahren nach Anspruch 1, **dadurch gekennzeichnet, dass** als Steuersignal (12) das verstärkte Carrier-Envelope-Offset-Signal (9) verwendet wird.

3. Verfahren nach Anspruch 1 oder 2, **dadurch gekennzeichnet, dass** zum Ermitteln des Carrier-Envelope-Offset-Signals (9) der Anteil des unkompensierten Zuges (2) kurzer, zeitlich äquidistanter Laserpulse oder die nullte Beugungsordnung (15) des unkompensierten Zuges in ein f-zu-2f-Interferometer (5) geführt werden.

4. Verfahren nach Anspruch 3, **dadurch gekennzeichnet, dass** das Carrier-Envelope-Offset-Signal (9) aus einem Schwebungssignal (6) des f-zu-2f-Interferometers (5) abgeleitet wird.

5. Verfahren nach Anspruch 4, **dadurch gekennzeichnet, dass** das Ableiten des Carrier-Envelope-Offset-Signals (9) eine Frequenzfilterung des Schwebungssignals (6) umfasst.

6. Verfahren nach Anspruch 4 oder 5, **dadurch gekennzeichnet, dass** als das Carrier-Envelope-Offset-Signal (9) ein Signal eines Oszillators verwendet wird, der phasenstarr an das Schwebungssignal (6) oder gefilterte Schwebungssignal (6') gekoppelt wird.

7. Verfahren nach Anspruch 6, **dadurch gekennzeichnet, dass** als Signal eines Oszillators das Signal eines spannungsgesteuerten Oszillators (21) verwendet wird.

8. Verfahren nach einem der Ansprüche 1 bis 5, **dadurch gekennzeichnet, dass** das Steuersignal (12) durch eine Frequenzmischung eines Offsetfrequenzsignals (24), welches eine Offsetfrequenz aufweist, mit dem Carrier-Envelope-Offset-Signal (9) erzeugt wird.

9. Verfahren nach Anspruch 8, **dadurch gekennzeichnet, dass** das Offsetfrequenzsignal (24) aus einem elektronisch gewandelten Signal des Zugs (2) kurzer, äquidistanter Laserpulse abgeleitet wird.

10. Verfahren nach Anspruch 9, **dadurch gekennzeichnet, dass** das Offsetfrequenzsignal (24) abgeleitet wird, indem ein Teil des Lichts des Zugs (2) kurzer, zeitlich äquidistanter Laserpulse auf einen photoempfindlichen Detektor (28) geleitet wird, so dass ein Repetitionssignal (29) erzeugt wird, welches einer elektronischen Frequenzteilung unterzogen wird.

11. Verfahren nach einem der Ansprüche 1 bis 10, **da-**

**durch gekennzeichnet, dass** der unkompensierte Zug (2) kurzer, zeitlich äquidistanter Laserpulse und/oder die erste Beugungsordnung und/oder die nullte Beugungsordnung des akustooptischen Frequenzschiebers über eine Sequenz von Prismen (32, 33) und/oder Gittern und/oder gechirpten Spiegeln geführt werden, die eine negative Gruppenlaufzeitdispersion angepasst an die Gruppenlaufzeitdispersion des akustooptischen Frequenzschiebers (13) aufprägen, um die Gruppenlaufzeitdispersion des akustooptischen Frequenzschiebers (13) zu kompensieren.

12. Verfahren nach einem der Ansprüche 1 bis 11, **dadurch gekennzeichnet, dass** zumindest der kompensierte Zug (17) kurzer, zeitlich äquidistanter Laserpulse, der unter der ersten Beugungsordnung (14) aus dem akustooptischen Frequenzschieber (13) austritt, über ein oder mehrere winkeldispersive Elemente geführt wird, um einen räumlichen Chirp, der aufgrund der wellenlängen-abhängigen Beugung in dem akustooptischen Frequenzschieber (13) entsteht, zu kompensieren.

13. Verfahren nach Anspuch 12, **dadurch gekennzeichnet, dass** die Carrier-Envelope-Offset-Frequenz ($f_{CEO}$) auf den Wert Null oder auf $((2n+1)/4) \cdot f_{rep}$ eingestellt wird, wobei n=0, 1, 2, ... und $f_{rep}$ die Repetitionsfrequenz der Laserpulse ist.

14. Verfahren nach einem der Ansprüche 1 bis 12, **dadurch gekennzeichnet, dass** eine Anpassung der Carrier-Envelope-Offset-Frequenz ($f_{CEO}$) der Einzellinien des Frequenzkamms des unkompensierten Zugs (2) kurzer, zeitlich äquidistanter Laserpulse an die Mittenfrequenz des akustooptischen Frequenzschiebers (13) ausgeführt wird.

15. Verfahren nach Anspruch 14, **dadurch gekennzeichnet, dass** die Anpassung der Carrier-Envelope-Offset-Frequenz an die Mittenfrequenz über eine Dispersionsanpassung in einem Resonator eines den unkompensierten Zug (2) kurzer, zeitlich äquidistanter Laserpulse erzeugenden Lasers (3) ausgeführt wird.

16. Vorrichtung (1) zum Erzeugen eines hinsichtlich zeitlicher Schwankungen der Carrier-Envelope-Offset-Frequenz ($f_{CEO}$) kompensierten Zuges (17) zeitlich äquidistanter kurzer Laserpulse, dessen Spektrum einen Frequenzkamm äquidistant beabstandeter Einzellinien aufweist, deren Carrier-Envelope-Offset-Frequenz ($f_{CEO}$) auf einen zeitlich gleichbleibenden vorgegebenen Wert eingestellt ist, umfassend

    - einen zum Empfangen eines unkompensierten Zuges (2) zeitlich äquidistanter kurzer Laserpulse ausgebildeten Eingang;

    - einen im Strahlengang des empfangenen unkompensierten Zuges (2) angeordneten akustooptischen Frequenzschieber (13);

    - eine Carrier-Envelope-Offset-Frequenz-Ermittlungseinheit (8), die dazu angeordnet und eingerichtet ist, um aus dem unkompensierten Zug (2) ein elektronisches Carrier-Envelope-Offset-Signal (9) zu erzeugen, das eine Frequenz aufweist, die der Carrier-Envelope-Offset-Frequenz ($f_{CEO}$) von Einzellinien im Frequenzkamm des unkompensierten Zuges (2) gleich ist;

    - weiters entweder Mittel (4), die ausgebildet sind, um einen Anteil des unkompensierten Zuges (2) vor seinem Auftreffen auf den akustooptischen Frequenzschieber (13) aus dem Strahlengang auszukoppeln und der Carrier-Envelope-Offset-Frequenz-Ermittlungseinheit (8) zuzuleiten;

    - oder Mittel (19), die ausgebildet sind, um die am Ausgang des akustooptischen Frequenzschiebers (13) austretende nullte Beugungsordnung (15) des unkompensierten Zuges der Carrier-Envelope-Offset-Frequenz-Ermittlungseinheit (8) zuzuleiten;

    - eine mit der Carrier-Envelope-Offset-Frequenz-Ermittlungseinheit (8) gekoppelte Steuereinheit (10), die dazu ausgebildet ist, aus dem Carrier-Envelope-Offset-Signal (9) ein Steuersignal (12) mit einer Frequenz ($f_s$) abzuleiten;

    - wobei der akustooptische Frequenzschieber (13) so ausgebildet und mit der Steuereinheit (10) verbunden ist, dass er mittels des Steuersignals (12) ansteuerbar und als linearer Frequenzschieber betreibbar ist, so dass im Betrieb der Vorrichtung am Ausgang des Frequenzschiebers (13) in der ersten Beugungsordnung (14) der hinsichtlich zeitlicher Schwankungen der Carrier-Envelope-Offset-Frequenz ($f_{CEO}$) kompensierte Zug (17) austritt, wobei die Einzellinien des dem kompensierten Zug (17) zugehörigen Frequenzkamms um die Frequenz ($f_s$) des Steuersignals (12) verschoben sind, bezogen auf die Einzellinien des unkompensierten Zuges (2).

17. Vorrichtung (1) nach Anspruch 16, **dadurch gekennzeichnet, dass** die Carrier-Envelope-Offset-Frequenz-Ermittlungseinheit (8) ein f-zu-2f-Interferometer (5) und einen photoempfindlichen Detektor (5') umfasst, der ein Schwebungssignal (6) aufnimmt, aus dem das Carrier-Envelope-Offset-Signal (9) abgeleitet ist.

18. Vorrichtung (1) nach Anspruch 17, **dadurch gekennzeichnet, dass** die Carrier-Envelope-Offset-Frequenz-Ermittlungseinheit (8) einen Hochfrequenzfilter (7) umfasst, um das Schwebungssignal (6) zu filtern und ein gefiltertes Schwebungssignal (6') zu erzeugen, aus dem das Carrier-Envelope-Offset-Signal (9) abgeleitet ist.

19. Vorrichtung (1) nach Anspruch 17 oder 18, **dadurch gekennzeichnet, dass** die Carrier-Envelope-Offset-Frequenz-Ermittlungseinheit (8) einen spannungsgesteuerten Oszillator (21) umfasst, dessen Ausgangssignal als Carrier-Envelope-Offset-Signal (9) dient, wobei der Oszillator (21) über eine Koppelschaltung phasenstarr an das Schwebungssignal (6) oder gefilterte Schwebungssignal (6') gekoppelt ist.

20. Vorrichtung (1) nach einem der Ansprüche 16 bis 19, **dadurch gekennzeichnet, dass** die Steuereinheit (10) ausgebildet ist, ein Offsetfrequenzsignal (24) zu empfangen, und eine Frequenzmischeinheit (25) umfasst, um das Steuersignal (12) durch eine Frequenzmischung des Offsetfrequenzsignals (24) mit dem Carrier-Envelope-Offset-Signal (9) zu erzeugen.

21. Vorrichtung (1) nach Anspruch 20, **dadurch gekennzeichnet, dass** ein weiterer photoempfindlicher Detektor (28), um aus dem Zug (2) kurzer Laserpulse ein elektronisches Repetitionssignal (29) zu erzeugen, welches die Repetitionsfrequenz ($f_{Rep}$) der kurzen Laserpulse repräsentiert, und eine Teilereinheit (30) vorgesehen sind, um durch eine Teilung des elektronischen Repetitionssignals (29) das Offsetfrequenzsignal (24) abzuleiten.

22. Vorrichtung (1) nach einem der Ansprüche 16 bis 21, **dadurch gekennzeichnet, dass** eine oder mehrere Sequenzen von Prismen (32, 33) und/oder Gittern und/oder gechirpten Spiegeln im Strahlengang des empfangenen Zugs (2) kurzer Laserpulse und/ oder der ersten Beugungsordnung und/oder der nullten Beugungsordnung des akustooptischen Frequenzschiebers (13) so angeordnet sind, dass dem unkompensierten Zug (2) kurzer Laserpulse und/ oder der ersten Beugungsordnung und/oder der nullten Beugungsordnung eine negative Gruppenlaufzeitdispersion angepasst an die Gruppenlaufzeitdispersion des akustooptischen Frequenzschiebers (13) aufgeprägt wird, um die Gruppenlaufzeitdispersion des akustooptischen Frequenzschiebers (13) zu kompensieren.

23. Vorrichtung (1) nach einem der Ansprüche 16 bis 22, **dadurch gekennzeichnet, dass** zumindest ein winkeldispersives Element, dem akustooptischen Frequenzschieber (13) nachgeordnet ist, so dass zumindest der unter der ersten Beugungsordnung (14) austretende kompensierte Zug (17) kurzer, zeitlich äquidistanter Laserpulse durch das winkeldispersive Element geführt ist, um einen räumlichen Chirp aufgrund der wellenlängenabhängigen Beugung im akustooptischen Frequenzschieber (13) zu kompensieren.

24. Vorrichtung (1) nach einem der Ansprüche 16 bis 23, **gekennzeichnet durch** einen modengekoppelten Laser (3), der den unkompensierten Zug (2) kurzer, zeitlich äquidistanter Laserpulse erzeugt, wobei der Laser (3) mindestens eine Dispersionsanpasseinrichtung (3') umfasst, um ungeregelt die Carrier-Envelope-Offset-Frequenz ($f_{CEO}$) der Einzellinien des Frequenzkamms des unkompensierten Zugs (2) kurzer, zeitlich äquidistanter Laserpulse an eine Mittenfrequenz des akustooptischen Frequenzschiebers (13) anzupassen.

25. Vorrichtung (1) nach einem der Ansprüche 16 bis 24, **dadurch gekennzeichnet, dass** die Carrier-Envelope-Offset-Frequenz ($f_{CEO}$) der Einzellinien des Frequenzkamms des unkompensierten Zugs (2) kurzer, zeitlich äquidistanter Laserpulse um weniger als 50 % der Bandbreite des akustooptischen Frequenzschiebers (13), innerhalb derer eine Frequenzverschiebung um die Mittenfrequenz des akustooptischen Frequenzschiebers (13) vorgenommen werden kann, von der Mittenfrequenz abweicht.

26. Vorrichtung (1) nach einem der Ansprüche 16 bis 25, **dadurch gekennzeichnet, dass** das Steuersignal (12) so ableitbar ist, dass die Carrier-Envelope-Offset-Frequenz ($f_{CEO}$) der äquidistant beabstandeten Einzellinien des Frequenzkamms des kompensierten Zuges (17) zeitlich äquidistanter kurzer Laserpulse auf den Wert Null eingestellt wird.

**Claims**

1. A method for generating a train (17) of temporally equidistant short laser pulses compensated with respect to time fluctuations of the carrier envelope offset frequency ($f_{CEO}$), the spectrum of which comprises a frequency comb of equidistant individual lines whose carrier envelope offset frequency ($f_{CEO}$) is adjusted to a predetermined value constant in time, comprising the following steps:

   - receiving an uncompensated train (2) of temporally equidistant short laser pulses;
   - leading the uncompensated train (2) on an acousto-optical frequency shifter (13);
   - determining a carrier envelope offset signal (9) having a frequency equal to the carrier envelope offset frequency ($f_{CEO}$) of individual lines in the frequency comb of the uncompensated train (2);
   - wherein either a portion of the uncompensated train (2) is coupled out prior to impacting on the acousto-optical frequency shifter (13) and is used to determine the carrier envelope offset signal (9), or

the zeroth diffraction order (15) of the uncompensated train emanating at the output of the acousto-optical frequency shifter (13) is used to determine the carrier envelope offset signal (9);
- deriving a control signal (12) with a frequency ($f_s$) from this carrier envelope offset signal (9);
- controlling the acousto-optical frequency shifter (13) with this control signal (12), so that at its output in the first diffraction order (14) the train (17) of temporally equidistant short laser pulses compensated with respect to time fluctuations of the carrier envelope offset frequency ($f_{CEO}$) is generated, wherein the individual lines of the frequency comb pertaining to the compensated train (17) are shifted by the frequency ($f_S$) of the control signal, with respect to the individual lines of the uncompensated train (2).

2. The method according to claim 1, **characterized in that** the amplified carrier envelope offset signal (9) is used as control signal (12).

3. The method according to claims 1 or 2, **characterized in that**, for determining the carrier envelope offset signal (9), the portion of the uncompensated train (2) of short, temporally equidistant laser pulses or the zeroth diffraction order (15) of the uncompensated train are led into an f-to-2f interferometer (5).

4. The method according to claim 3, **characterized in that** the carrier envelope offset signal (9) is derived from a beat signal (6) of the f-to-2f interferometer (5).

5. The method according to claim 4, **characterized in that** the deriving of the carrier envelope offset signal (9) comprises frequency filtering of the beat signal (6).

6. The method according to claims 4 or 5, **characterized in that** a signal of an oscillator that is coupled in a phase-locked manner to the beat signal (6) or the filtered beat signal (6') is used as the carrier envelope offset signal (9).

7. The method according to claim 6, **characterized in that** the signal of a voltage-controlled oscillator (21) is used as the signal of an oscillator.

8. The method according to any of claims 1 to 5, **characterized in that** the control signal (12) is generated by frequency mixing of an offset frequency signal (24) comprising an offset frequency with the carrier envelope offset signal (9).

9. The method according to claim 8, **characterized in that** the offset frequency signal (24) is derived from an electronically converted signal of the train (2) of short, equidistant laser pulses.

10. The method according to claim 9, **characterized in that** the offset frequency signal (24) is derived **in that** a portion of the light of the train (2) of short, temporally equidistant laser pulses is led on a photosensitive detector (28), so that a repetition signal (29) is generated which is subject to an electronic frequency division.

11. The method according to any of claims 1 to 10, **characterized in that** the uncompensated train (2) of short, temporally equidistant laser pulses and/or the first diffraction order and/or the zeroth diffraction order of the acousto-optical frequency shifter is / are led over a sequence of prisms (32, 33) and/or gratings and/or chirped mirrors which introduce a negative group delay dispersion adapted to the group delay dispersion of the acousto-optical frequency shifter (13) so as to compensate the group delay dispersion of the acousto-optical frequency shifter (13).

12. The method acording to any of claims 1 to 11, **characterized in that** at least the compensated train (17) of short, temporally equidistant laser pulses which emanates in the first diffraction order (14) from the acousto-optical frequency shifter (13) is led over one or several angle dispersive elements so as to compensate a spatial chirp occurring due to the wavelength-dependent diffraction in the acousto-optical frequency shifter (13).

13. The method according to claim 12, **characterized in that** the carrier envelope offset frequency ($f_{CEO}$) is adjusted to the value zero or to $((2n+1)/4) \cdot f_{rep}$, wherein n = 0, 1, 2, ... and $f_{rep}$ is the repetition frequency of the laser pulses.

14. The method according to any of claims 1 to 12, **characterized in that** an adaptation of the carrier envelope offset frequency ($f_{CEO}$) of the individual lines of the frequency comb of the uncompensated train (2) of short, temporally equidistant laser pulses to the mid-band frequency of the acousto-optical frequency shifter (13) is performed.

15. The method according to claim 14, **characterized in that** the adaptation of the carrier envelope offset frequency to the mid-band frequency is performed by a dispersion adaptation in a resonator of a laser (3) generating the uncompensated train (2) of short, temporally equidistant laser pulses.

16. A device (1) for generating a train (17) of temporally equidistant short laser pulses compensated with respect to temporal fluctuations of the carrier envelope offset frequency ($f_{CEO}$), the spectrum of which comprises a frequency comb of equidistant individual lines whose carrier envelope offset frequency ($f_{CEO}$) is adjusted to a predetermined value constant in time, comprising:

- an input adapted to receive an uncompensated train (2) of temporally equidistant short laser pulses;
- an acousto-optical frequency shifter (13) arranged in the optical path of the received uncompensated train (2);
- a carrier envelope offset frequency determining unit (8) arranged and adapted for generating, from the uncompensated train (2), an electronic carrier envelope offset signal (9) having a frequency equal to the carrier envelope offset frequency ($f_{CEO}$) of individual lines in the frequency comb of the uncompensated train (2);
- furthermore either means (4) adapted to couple out a portion of the uncompensated train (2) from the light path prior to impacting on the acousto-optical frequency shifter (13) and to lead it to the carrier envelope offset frequency determining unit (8);
- or means (19) adapted to supply the zeroth diffraction order (15) of the uncompensated train emanating at the output of the acousto-optical frequency shifter (13) to the carrier envelope offset frequency determining unit (8);
- a control unit (10) which is coupled to the carrier envelope offset frequency determining unit (8), and which is adapted to derive a control signal (12) with a frequency ($f_s$) from the carrier envelope offset signal (9);

- wherein the acousto-optical frequency shifter (13) is adapted and connected with the control unit (10) such that it is controllable by the control signal (12) and operable as a linear frequency shifter, so that, in operation of the device, in the first diffraction order (14) the train (17) compensated with respect to temporal fluctuations of the carrier envelope offset frequency ($f_{CEO}$) emanates at the output of the frequency shifter (13), wherein the individual lines of the frequency comb pertaining to the uncompensated train (17) are shifted by the frequency ($f_s$) of the control signal (12), with respect to the individual lines of the uncompensated train (2).

**17.** The device (1) according to claim 16, **characterized in that** the carrier envelope offset frequency determining unit (8) comprises an f-to-2f interferometer (5) and a photosensitive detector (5') receiving a beat signal (6) from which the carrier envelope offset signal (9) is derived.

**18.** The device (1) according to claim 17, **characterized in that** the carrier envelope offset frequency determining unit (8) comprises a high frequency filter (7) to filter the beat signal (6) and to generate a filtered beat signal (6') from which the carrier envelope offset signal (9) is derived.

**19.** The device (1) according to claims 17 or 18, **characterized in that** the carrier envelope offset frequency determining unit (8) comprises a voltage-controlled oscillator (21) whose output signal serves as carrier envelope offset signal (9), wherein the oscillator (21) is, via a coupling circuit, coupled in a phase-locked manner to the beat signal (6) or the filtered beat signal (6').

**20.** The device (1) according to any of claims 16 to 19, **characterized in that** the control unit (10) is designed to receive an offset frequency signal (24) and comprises a frequency mixing unit (25) to generate the control signal (12) by frequency mixing the offset frequency signal (24) with the carrier envelope offset signal (9).

**21.** The device (1) according to claim 20, **characterized in that** a further photosensitive detector (28) is provided to generate, from the train (2) of short laser pulses, an electronic repetition signal (29) representing the repetition frequency ($f_{rep}$) of the short laser pulses, and a divider unit (30) is provided to derive the offset frequency signal (24) by a division of the electronic repetition signal (29).

**22.** The device (1) according to any of claims 16 to 21, **characterized in that** one or several sequences of prisms (32, 33) and/or gratings and/or chirped mirrors are arranged in the beam path of the received train (2) of short laser pulses and/or the first diffraction order and/or the zeroth diffraction order of the acousto-optical frequency shifter (13) such that a negative group delay dispersion adapted to the group delay dispersion of the acousto-optical frequency shifter (13) is applied on the uncompensated train (2) of short laser pulses and/or the first diffraction order and/or the zeroth diffraction order so as to compensate the group delay dispersion of the acousto-optical frequency shifter (13).

**23.** The device (1) according to any of claims 16 to 22, **characterized in that** at least one angle-dispersive element is arranged downstream of the acousto-optical frequency shifter (13), so that at least the compensated train (17) of short, temporally equidistant laser pulses emanating in the first diffraction order (14) is led through the angle-dispersive element so as to compensate a spatial chirp due to the wavelength-dependent diffraction in the acousto-optical frequency shifter (13).

**24.** The device (1) according to any of claims 16 to 23, **characterized by** a mode-coupled laser (3) generating the uncompensated train (2) of short, temporally equidistant laser pulses, wherein the laser (3) comprises at least one dispersion adaptation device (3') so as to adapt the carrier envelope offset frequency ($f_{CEO}$) of the individual lines of the frequency comb of the uncompensated train (2) of short, temporally equidistant laser pulses in an uncontrolled manner to a mid-band frequency of the acousto-optical frequency shifter (13).

**25.** The device (1) according to any of claims 16 to 24, **characterized in that** the carrier envelope offset frequency ($f_{CEO}$) of the individual lines of the frequency comb of the uncompensated train (2) of short, temporally equidistant laser pulses deviates from the mid-band frequency by less than 50% of the bandwidth of the acousto-optical frequency shifter (13) within which a frequency shift by the mid-band frequency of the acousto-optical frequency shifter (13) can be performed.

**26.** The device (1) according to any of claims 16 to 25, **characterized in that** the control signal (12) is derivable such that the carrier envelope offset frequency ($f_{CEO}$) of the equidistant individual lines of the frequency comb of the compensated train (17) of temporally equidistant short laser pulses is set to the value zero.

**Revendications**

**1.** Procédé de production d'un train (17) d'impulsions laser courtes équidistantes dans le temps compensé par rapport aux fluctuations dans le temps de la fréquence Carrier-Envelope-Offset ($f_{CEO}$), dont le spectre présente un peigne de fréquences de lignes individuelles espacées de manière équidistante dont la fréquence Carrier-Envelope-Offset ($f_{CEO}$) est réglée sur une valeur prédéfinie invariable dans le temps, comprenant les étapes suivantes :

- réception d'un train (2) non compensé d'impulsions laser courtes équidistantes dans le temps ;
- transfert du train (2) non compensé vers un modulateur de fréquence acousto-optique (13) ;
- détermination d'un signal Carrier-Envelope-Offset (9) qui présente une fréquence qui est identique à la fréquence Carrier-Envelope-Offset ($f_{CEO}$) de lignes individuelles comprises dans le peigne de fréquences du train (2) non compensé ;
- soit une part du train (2) non compensé étant dissociée avant de rencontrer le modulateur de fréquence acousto-optique (13) et utilisée pour la détermination du signal Carrier-Envelope-Offset (9), soit l'ordre de diffraction étalonné à zéro (15) du train non compensé étant émis à la sortie du modulateur de fréquence acousto-optique (13) est utilisé pour la détermination du signal Carrier-Envelope-Offset (9) ;
- dérivation d'un signal de commande (12) présentant une fréquence ($f_s$) à partir de ce signal Carrier-Envelope-Offset (9) ;
- excitation du modulateur de fréquence acousto-optique (13) au moyen de ce signal de commande (12) de sorte que le train (17) d'impulsions laser courtes équidistantes dans le temps compensé par rapport aux fluctuations dans le temps de la fréquence Carrier-Envelope-Offset ($f_{CEO}$) est produit dans le premier ordre de diffraction (14) au niveau de sa sortie, les lignes individuelles du peigne de fréquences appartenant au train (17) compensé étant décalées de la fréquence ($f_s$) du signal de commande (12) par rapport aux lignes individuelles du train (2) non compensé.

**2.** Procédé selon la revendication 1, **caractérisé en ce que** le signal Carrier-Envelope-Offset (9) amplifié est utilisé comme signal de commande (12).

**3.** Procédé selon la revendication 1 ou 2, **caractérisé en ce que** pour déterminer le signal Carrier-Envelope-Offset (9), la part du train (2) non compensé d'impulsions laser courtes équidistantes dans le temps ou l'ordre de diffraction étalonné à zéro (15) du train non compensé sont amenés dans un interféromètre f à 2f (5).

**4.** Procédé selon la revendication 3, **caractérisé en ce que** le signal Carrier-Envelope-Offset (9) est dérivé à partir d'un signal de battement (6) de l'interféromètre f à 2f (5).

**5.** Procédé selon la revendication 4, **caractérisé en ce que** la dérivation du signal Carrier-Envelope-Offset (9) comprend un filtrage de fréquence du signal de battement (6).

**6.** Procédé selon la revendication 4 ou 5, **caractérisé en ce qu'**un signal d'un oscillateur, qui est couplé à phase bloquée au signal de battement (6) ou au signal de battement filtré (6'), est utilisé comme signal Carrier-Envelope-Offset (9).

**7.** Procédé selon la revendication 6, **caractérisé en ce que** le signal d'un oscillateur commandé en tension (21) est utilisé comme signal d'un oscillateur.

**8.** Procédé selon l'une quelconque des revendications 1 à 5, **caractérisé en ce que** le signal de commande (12) est généré par un mélange de fréquences d'un signal de fréquence Offset (24) qui présente une fréquence Offset qui est générée avec le signal Carrier-Envelope-Offset (9).

9. Procédé selon la revendication 8, **caractérisé en ce que** le signal de fréquence Offset (24) est dérivé à partir d'un signal converti électroniquement du train (2) d'impulsions laser courtes équidistantes.

10. Procédé selon la revendication 9, **caractérisé en ce que** le signal de fréquence Offset (24) est dérivé en transférant une part de la lumière du train (2) d'impulsions laser courtes équidistantes dans le temps vers un détecteur photosensible (28) de sorte qu'un signal de répétition (29) est généré, lequel est soumis à une division de fréquence électronique.

11. Procédé selon l'une quelconque des revendications 1 à 10, **caractérisé en ce que** le train (2) non compensé d'impulsions laser courtes équidistantes dans le temps et/ou le premier ordre de diffraction et/ou l'ordre de diffraction étalonné à zéro du modulateur de fréquence acousto-optique sont dirigés via une série de prismes (32, 33) et/ou de grilles et/ou de miroirs à dérive de fréquence qui marquent une dispersion de retard de groupe négative adaptée à la dispersion de retard de groupe du modulateur de fréquence acousto-optique (13) afin de compenser la dispersion de retard de groupe du modulateur de fréquence acousto-optique (13).

12. Procédé selon l'une quelconque des revendications 1 à 11, **caractérisé en ce qu'**au moins le train (17) compensé d'impulsions laser courtes équidistantes dans le temps, qui est émis par le modulateur de fréquence acousto-optique (13) sous le premier ordre de diffraction (14), est dirigé via un ou plusieurs éléments dispersifs d'angle afin de compenser une dérive de fréquence spatiale qui apparaît en raison d'une diffraction liée à la longueur d'onde dans le modulateur de fréquence acousto-optique (13).

13. Procédé selon la revendication 12, **caractérisé en ce que** la fréquence Carrier-Envelope-Offset ($f_{CEO}$) est réglée sur la valeur zéro ou sur (($2n+1)/4·f_{rep}$, $n$ = 0, 1, 2, 000 et $f_{rep}$ étant la fréquence de répétition des impulsions laser.

14. Procédé selon l'une quelconque des revendications 1 à 12, **caractérisé en ce que** l'adaptation de la fréquence Carrier-Envelope-Offset ($f_{CEO}$) des lignes individuelles du peigne de fréquences du train (2) non compensé d'impulsions laser courtes équidistantes dans le temps est réalisée à la fréquence centrale du modulateur de fréquence acousto-optique (13).

15. Procédé selon la revendication 14, **caractérisé en ce que** l'adaptation de la fréquence Carrier-Envelope-Offset à la fréquence centrale est réalisée par le biais d'une adaptation de la dispersion dans un résonateur d'un laser (3) produisant le train (2) non compensé d'impulsions laser courtes équidistantes dans le temps.

16. Dispositif (1) de production d'un train (17) d'impulsions laser courtes équidistantes dans le temps compensé par rapport aux fluctuations dans le temps de la fréquence Carrier-Envelope-Offset ($f_{CEO}$), dont le spectre présente un peigne de fréquences de lignes individuelles espacées de manière équidistante dont la fréquence Carrier-Envelope-Offset ($f_{CEO}$) est réglée sur une valeur prédéfinie invariable dans le temps, comprenant

- une entrée conçue pour recevoir un train (2) non compensé d'impulsions laser courtes équidistantes dans le temps ;
- un modulateur de fréquence acousto-optique (13) disposé dans la trajectoire de rayon du train (2) non compensé reçu ;
- une unité de détermination d'une fréquence Carrier-Envelope-Offset (8) qui est disposée et conçue pour générer à partir du train (2) non compensé un signal électronique Carrier-Envelope-Offset (9) qui présente une fréquence qui est identique à la fréquence Carrier-Envelope-Offset ($f_{CEO}$) de lignes individuelles dans le peigne de fréquences du train (2) non compensé ;
- de plus, soit des moyens (4) qui sont conçus pour dissocier de la trajectoire de rayon une part du train (2) non compensé avant qu'elle rencontre le modulateur de fréquence acousto-optique (13) et la transmettre à l'unité de détermination de la fréquence Carrier-Envelope-Offset (8) ;
- soit des moyens (19) qui sont conçus pour transmettre l'ordre de diffraction étalonné à zéro (15) du train non compensé étant émis à la sortie du modulateur de fréquence acousto-optique (13) à l'unité de la détermination de la fréquence Carrier-Envelope-Offset (8) ;
- une unité de commande (10) couplée à l'unité de la détermination de la fréquence Carrier-Envelope-Offset (8) qui est conçue pour dériver un signal de commande (12) présentant une fréquence ($f_s$) à partir du signal Carrier-Envelope-Offset (9) ;
- le modulateur de fréquence acousto-optique (13) étant conçu et relié à l'unité de commande (10) de manière à pouvoir être excité et opéré comme modulateur de fréquence linéaire au moyen du signal de commande (12) de sorte que pendant l'utilisation du dispositif, le train (17) compensé par rapport aux fluctuations dans le temps de la fréquence Carrier-Envelope-Offset ($f_{CEO}$) est émis au niveau de la sortie du modulateur de fréquence (13) dans le premier ordre de diffraction (14), les lignes individuelles du peigne de fréquences appartenant au train (17) compensé étant décalées de la fréquence ($f_s$) du signal de commande (12) par rapport aux lignes individuelles du train (2) non compensé.

17. Dispositif (1) selon la revendication 16, **caractérisé en ce que** l'unité de détermination de la fréquence Carrier-Envelope-Offset (8) comprend un interféromètre f à 2f (5) et un détecteur photosensible (5') qui reçoit un signal de battement (6) à partir duquel le signal Carrier-Envelope-Offset (9) est dérivé.

18. Dispositif (1) selon la revendication 17, **caractérisé en ce que** l'unité de la détermination de la fréquence Carrier-Envelope-Offset (8) comprend un filtre à haute fréquence (7) afin de filtrer le signal de battement (6) et de générer un signal de battement filtré (6') à partir duquel le signal Carrier-Envelope-Offset (9) est dérivé.

19. Dispositif (1) selon la revendication 17 ou 18, **caractérisé en ce que** l'unité de détermination de la fréquence Carrier-Envelope-Offset (8) comprend un oscillateur commandé en tension (21) dont le signal de sortie sert de signal Carrier-Envelope-Offset (9), étant entendu que l'oscillateur (21) étant couplé à phase bloquée au signal de battement (6) ou au signal de battement filtré (6').

20. Dispositif (1) selon l'une quelconque des revendications 16 à 19, **caractérisé en ce que** l'unité de commande (10) est conçue pour recevoir un signal de fréquence Offset (24) et comprend une unité de mélange de fréquences (25) afin de générer le signal de commande (12) par le biais d'un mélange de fréquences du signal de fréquence Offset (24) avec le signal Carrier-Envelope-Offset (9).

21. Dispositif (1) selon la revendication 20, **caractérisé en ce qu'**un détecteur photosensible supplémentaire (28) est prévu pour générer, à partir du train (2) d'impulsions laser courtes, un signal de répétition électronique (29) qui représente la fréquence de répétition ($f_{Rep}$) des impulsions laser courtes et une unité de division (30) pour dériver le signal de fréquence Offset (24) par le biais d'une division du signal de répétition électronique (29).

22. Dispositif (1) selon l'une quelconque des revendications 16 à 21, **caractérisé en ce qu'**une ou plusieurs séries de prismes (32, 33) et/ou de grilles et/ou de miroirs à dérive de fréquence sont disposées dans la trajectoire de rayon du train (2) reçu d'impulsions laser courtes et/ou du premier ordre de diffraction et/ou de l'ordre de diffraction étalonné à zéro du modulateur de fréquence acousto-optique (13) de sorte qu'une dispersion de retard de groupe négative adaptée à la dispersion de retard de groupe du modulateur de fréquence acousto-optique (13) est marquée du train (2) non compensé d'impulsions laser courtes et/ou du premier ordre de diffraction et/ou du premier ordre de diffraction étalonné à zéro afin de compenser la dispersion de retard de groupe du modulateur de fréquence acousto-optique (13).

23. Dispositif (1) selon l'une quelconque des revendications 16 à 22, **caractérisé en ce qu'**au moins un élément dispersif d'angle est monté en aval du modulateur de fréquence acousto-optique (13) de sorte qu'au moins le train (17) compensé d'impulsions laser courtes équidistantes dans le temps, qui est émis sous le premier ordre de diffraction (14), est dirigé à travers l'élément dispersif d'angle afin de compenser une dérive de fréquence spatiale en raison de la diffraction liée à la longueur d'onde dans le modulateur de fréquence acousto-optique (13).

24. Dispositif (1) selon l'une quelconque des revendications 16 à 23, **caractérisé par** un laser à couplage de modes (3) qui produit le train (2) non compensé d'impulsions laser courtes équidistantes dans le temps, le laser (3) comprenant au moins un dispositif d'adaptation de la dispersion (3') pour adapter sans régulation la fréquence Carrier-Envelope-Offset ($f_{CEO}$) des lignes individuelles du peigne de fréquences du train (2) non compensé d'impulsions laser courtes équidistantes dans le temps à une fréquence centrale du modulateur de fréquence acousto-optique (13).

25. Dispositif (1) selon l'une quelconque des revendications 16 à 24, **caractérisé en ce que** la fréquence Carrier-Envelope-Offset ($f_{CEO}$) des lignes individuelles du peigne de fréquences du train (2) non compensé d'impulsions laser courtes équidistantes dans le temps dévie de la fréquence centrale de moins de 50 % de la largeur de bande du modulateur de fréquence acousto-optique (13) à l'intérieur de laquelle un déplacement de fréquence peut être réalisé pour la fréquence centrale du modulateur de fréquence acousto-optique (13).

26. Dispositif (1) selon l'une quelconque des revendications 16 à 25, **caractérisé en ce que** le signal de commande (12) peut être dérivé de sorte que la fréquence Carrier-Envelope-Offset ($f_{CEO}$) des lignes individuelles espacées de manière équidistante du peigne de fréquences du train (17) compensé d'impulsions laser courtes équidistantes dans le temps est réglée sur la valeur zéro.

Fig. 1

Fig. 2

**Fig. 3a**

**Fig. 3b**

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19911103 A1
- US 20070086713 A1
- US 20040017833 A1
- US 20040179561 A1


**In der Beschreibung aufgeführte Nicht-Patentliteratur**

- **L. XU et al.** Route to phase control of ultrashort light pulses. *Opt. Lett.,* 1996, vol. 21, 2008 ff
- **H.R. TELLE et al.** Carrier-envelope offset phase control: A novel concept for absolute optical frequency measurement and ultrashort pulse generation. *Appl. Phys. B,* 1999, vol. 69, 327 ff
- **JONES R. J. et al.** Stabilization of femtosecond lasers for optical frequency metrology and direct optical to radio frequency synthesis. *Physical Review Letters,* 09. April 2001, vol. 86 (15), 3288-3291
- **JONES R. J. et al.** Optical frequency measurements with a reference cavity stabilized femtosecond laser for improved short term stability. *Technical Digest. Summaries of papers presented at the Conference on Lasers and Electro-optics,* 2002, vol. 1, 603-604
- **S. JONES R. J. et al.** Stabilization of the frequency, phase, and repetition rate of an ultra-short pulse train to a Fabry-Perot reference cavity. *Optics Communications,* 01. Marz 2000, vol. 175 (4-6), 409-418
- **H.R. TELLE et al.** *Appl. Phys. B,* 1999, vol. 69, 327 ff